# EUROPÄISCHE PATENTSCHRIFT

(11) **EP 2 285 916 B1**
(45) Veröffentlichungstag und Bekanntmachung des Hinweises auf die Patenterteilung: **16.11.2011**
(21) Anmeldenummer: 09745551.3
(22) Anmeldetag: 13.05.2009
(51) Int. Cl.: C09D 11/00, C09D 11/02, C09D 11/10

(54) **MIT STRAHLENHÄRTBARER DRUCKFARBE ODER DRUCKLACK BESCHICHTETER SCHICHTSTOFF UND FORMTEIL**
LAMINATE COATED WITH RADIATION-HARDENABLE PRINTING INK OR PRINTING LACQUER AND MOULDED PIECE
MATÉRIAU STRATIFIÉ REVÊTU D'UNE ENCRE D'IMPRESSION OU D'UNE LAQUE D'IMPRESSION RADIODURCISSABLE ET PIÈCE MOULÉE

(30) Priorität: 14.05.2008 DE 102008023499
(43) Veröffentlichungstag der Anmeldung: 23.02.2011
(73) Patentinhaber: Bayer MaterialScience AG, 51368 Leverkusen (DE)
(72) Erfinder: KÜNZEL, Roland, 51381 Leverkusen (DE); MEYER, Klaus, 41539 Dormagen (DE); KINZEL, Norbert, 50765 Köln (DE); SCHÄFER, Wolfgang, 72160 Horb am Neckar (DE); HAUCK, Martin, 71263 Weil der Stadt (DE)
(86) Internationale Anmeldenummer: PCT/EP2009/003390
(87) Internationale Veröffentlichungsnummer: WO 2009/138217

(56) Entgegenhaltungen:
- EP-A2- 0 688 839
- WO-A1-2006/098676
- GB-A- 2 370 279
- US-A1- 2004 152 799

## Beschreibung

Die vorliegende Erfindung betrifft einen mit einer strahlenhärtbaren Druckfarbe oder Drucklack beschichteten Schichtstoff sowie ein Verfahren zum Herstellen eines solchen Schichtstoffes unter Verwendung eines solchen Drucklackes bzw. einer solchen Druckfarbe. Weiterhin betrifft die Erfindung ein hinterfülltes Formteil enthaltend einen solchen Schichtstoff sowie ein Verfahren zur Herstellung eines solchen Formteils.

Aus dem Stand der Technik sind Druckfarben basierend auf Festharzen, insbesondere Polycarbonat, bekannt, welche typischerweise in halogenfreien Lösungsmitteln gelöst sind. Eine derartige, gattungsbildend herangezogene Druckfarbe beschreibt die EP 0 688 839 B1, weiche im Hinblick auf das dort beschriebene Polycarbonat als eine mögliche Realisierungsform des zur Erfindung gehörigen Bindemittels in die vorliegende Anmeldung einbezogen werden soll.

Allerdings ist diese aus dem Stand der Technik bekannte Druckfarbe insoweit nachteilig, als dass die aus dem Stand der Technik bekannten lösemittelhaltigen Druckfarben durch Verdunstung des Lösemittels zum Eintrocknen im Sieb neigen, insbesondere nach einer gewissen Standzeit ohne Drucken. Dadurch kommt es zum Siebverschluß und zusätzliches Reinigen ist notwendig. Im ungünstigsten Fall wird dadurch das Sieb unbrauchbar. Ein weiterer Nachteil dieser aus dem Stand der Technik bekannten Technologie besteht darin, dass das Trocknen der Druckfarbe mittels Warmluft im Trockenkanal oder Ofen erfolgen muss; dies führt dazu, dass die Verarbeitung durch die zum Trocknen notwendige Zeit verlängert wird und damit nicht beliebig optimierbar ist. Durch die zur Wärmetrocknung verwendeten IR-Trockner besteht außerdem ein erhöhter Platz- und Energiebedarf, woraus sich eine Erhöhung der Kosten ergibt.

Aus dem Stand der Technik bekannt ist ferner ein strahlenhärtbares Harz, welches mit reaktiven, ebenfalls UV-härtbaren Monomeren, versehen ist. Die zugehörige GB 2 370 279 A beschreibt dabei ein strahlenhärtendes Polyurethanacrylat mit Polycarbonatbestandteil in der chemischen Struktur, welches jedoch Nachteile bei der Verarbeitbarkeit aufweist. Insbesondere beim Druck auf Polycarbonat-Substraten, zeigt sich das Problem schlechter Haftung bei den so genannten Hinterspritz-Prozessen, also bei dem Verarbeitungsverfahren, bei welchem dann eine mittels der Druckfarbe bedruckte Polycarbonatfolie auf der Bedruckungsseite nochmals mit einem thermoplastischen Kunststoff hinterspritzt wird. Dadurch dass die Farbe wie in einem Sandwich zwischen Polycarbonatfolie und Spritzgußmaterial liegt, kann kein Abrieb der Folie im täglichen Gebrauch erfolgen. Ein weiterer Nachteil dieses Standes der Technik ist das Kleben des Druckbildes auf der Form beim Verformen sowie die hohe Druck- und Temperaturempfindlichkeit des Druckbildes, das wiederum beim Hinterspritzen zu nachteiligem Auswaschen und mithin schlechtem Druckbild führt. Aufgabe der vorliegenden Erfindung ist es daher, einen Schichtstoff bzw. ein Verfahren zum Herstellen eines Schichtstoffes mit einer Druckfarbe, zu schaffen, wobei die Haftung der Druckfarbe und/oder des Drucklacks im Hinblick auf das Substrat verbessert und optimiert ist. Insbesondere wird die Notwendigkeit der Verwendung von flüchtigen Lösemittel ausgeschlossen, damit ein unerwünschtes Eintrocknen im Sieb beim Druckprozess sowie das notwendige Nachverdünnen mit Lösemittel verhindert und dadurch die Verarbeitungszeit verkürzt wird. Dadurch können feinere Details gedruckt werden und somit ist eine höhere Druckqualität erreichbar. Bei dem weiteren Verarbeitungsschritt des Hinterspritzens kann zudem ein nachteiliges Auswaschen oder Verschlechterungen des Druckbildes vermieden werden.

Die Aufgabe wird erfindungsgemäß gelöst durch einen Schichtstoff umfassend
a) ein Substrat aus wenigstens einem thermoplastischen Kunststoff, vorzugsweise eine Folie aus wenigstens einem thermoplastischen Kunststoff,
b) eine ein- oder mehrschichtige Farbschicht und/oder Lackschicht aus einer Druckfarbe oder eines Drucklackes, enthaltend
   - als Bindemittel mindestens ein nicht-strahlenhärtbares aromatisches Polycarbonat auf der Basis eines geminal disubstituierten Dihydroxydiphenylcycloalkans, und
   - als Lösemittel mindestens ein strahlenhärtbares Monomer, das ausgewählt ist aus der Gruppe Acrylate, Methacrylate, Vinylether und stickstoffhaltige Verbindungen mit einer ethylenischen Doppelbindung,
dadurch gekennzeichnet, dass das Bindemittel in dem Lösemittel gelöst ist und das Lösemittel nach der Härtung in der Druckfarbe oder dem Drucklack in chemisch vernetzter Form eingebunden ist. Vorteilhafte Weiterbildungen der Erfindung sind in den Unteransprüchen beschrieben.

In erfindungsgemäß vorteilhafter Weise wurde zunächst überraschenderweise erkannt, dass verschiedene strahlenhärtbare Monomere das thermoplastische Polycarbonatharz überhaupt in eine stabile Lösung bringen können und sich dann durch UV-Härtung zur Filmbildung mit demselben eignen. Dies wird erfindungsgemäß vorteilhaft dann dazu genutzt, dass die resultierende Druckfarbe und/oder der Drucklack im Sieb bei einem Siebdruckverfahren nicht eintrocknet, ferner kein nachteiliges Nachverdünnen und/oder Reinigen des Siebes nach Eintrocknung od. dgl. Aufwand nötig ist. Typischerweise erfolgt das Härten bevorzugt unter UV-Bestrahlung, LED-Härtung oder ggf. mit Elektronenstrahlhärtung, wobei typische Härtzeiten von deutlich unter 1 sek. zu einer sehr schnellen Aushärtung der flüssigen Druckfarbe und/oder des Drucklackes führen. Nach Aushärtung sind die Drucke direkt ohne zusätzliche Temperaturzufügung durch z.B. einen Trocknungskanal weiterverarbeitbar. Dadurch wird die Verarbeitungszeit für damit durchgeführte Drucke deutlich verkürzt und die Produktivität erhöht. Vorteilhaft ist zudem, dass durch das Vermeiden jeglichen Auswaschens od. dgl. in Kombination mit bester Haftung an dem Foliensubstrat feine Details druckbar sind und dadurch mit dem Siebdruckverfahren potenziell weitere Anwendungsfelder zugänglich werden.

Im Rahmen der Erfindung ist dabei der Begriff "UV-härtbar" bzw. "strahlenhärtbar" auch als "vernetzbar" zu verstehen, was bedeutet, dass mittels radikalischer Kettenpolymerisation eine Aushärtung des Farbfilms erfolgt. Der Unterschied zwischen üblicherweise bisher im Stand der Technik eingesetzten Lösemittel und dem erfindungsgemäß eingesetzten härtbaren Monomer, welches als lösendes Medium für das Polycarbonatharz eingesetzt wird, besteht darin, dass das Lösungsmittel nach dem herkömmlichen Verständnis bei der Trocknung der Farbe in die Luft abgegeben wird, die härtbaren Monomere im Farbfilm hingegen eingebunden werden bzw. bleiben. Dadurch wird die Belastung der Umwelt durch VOC (Volatile Organic Compounds), die beim Abführen des Lösemittels bei der Trocknung eines auf Lösemittel basierten Systems entstehen kann, vermieden. Gleichzeitig benötigt die deutlich kompaktere UV-Härtungsanlage deutlich weniger Platz im Druckraum. Ein weiterer Vorteil der UV-Härtung besteht im geringeren Energieverbrauch verglichen mit einem Trockenkanal, welcher für die Trocknung des lösemittelbasierten Systems eingesetzt wird.

Der Begriff "nicht-strahlenhärtbar" bedeutet in diesem Zusammenhang insbesondere auch das Nicht-Vorliegen einer reaktiven Doppelbindung

Strahlenhärtende Druckfarben können zusätzlich zu den erfindungsgemäß enthaltenen Bindemitteln wie alle Druckfarben und/oder Drucklacke viele verschiedene Komponenten enthalten und müssen selbstverständlich der jeweiligen Anwendung und dem bedruckten Substrat angepasst werden. Zu den weiteren Komponenten zählen z.B. Pigmente, Füllstoffe und Hilfsmittel, welche meist nur in sehr geringen Mengen benötigt werden, für eine problemlose Verarbeitung jedoch häufig günstig sind.

Dabei sorgt vorteilhaft das thermoplastische, nicht UV-härtbare Polycarbonatharz in Verbindung mit dem typischerweise nicht flüchtigen (oder bestenfalls gering flüchtigen) Monomer dafür, dass die Farbe an einem Substrat (z.B. einer Kunststofffolie) fest verankert wird und so der fertige Druck Beanspruchungen durch Abrieb, Hitze und mechanische Verbiegung sowie die Bedingungen, wie sie üblicherweise beim Hinterspritzen der bedruckten Folie entstehen, günstig übersteht. Aufgrund der Nicht-Flüchtigkeit der einzelnen Komponenten der Druckfarbe ist auch während einer Verarbeitung kein Nachverdünnen od. dgl. als zusätzlicher Prozessschritt erforderlich, wie es etwa bei halogenfreien Lösemitteln aus dem Stand der Technik notwendig ist.

Vorteilhaft ist zudem, dass die erfindungsgemäß verwendeten Polycarbonate hoch wärmebeständig sowie sehr flexibel sind, so dass sich diese ideal für Spritzgießvorgänge od. dgl. eignen.

Zur praktischen Realisierung der Erfindung eignen sich besonders die aus der erwähnten EP 0 688 839 B1 bekannten Polycarbonate der Firma Bayer MaterialScience AG, welche jedoch, abweichend vom bekannten Stand der Technik, im Rahmen der vorliegenden Erfindung gelöst in einem UV-härtbaren oder strahlenhärtbaren Monomer oder einem Gemisch härtbaren Monomeren vorliegen.

Die Farbschicht kann ein oder mehrschichtig sein. Im Falle einer mehrschichtigen Farbschicht können mehrere gleiche oder unterschiedliche Farbschichten aufeinander aufgebracht werden. Es kann bevorzugt sein, dass die Farbschicht mehrschichtig ist.

Weiterhin Gegenstand der vorliegenden Erfindung ist ein Verfahren zur Herstellung des erfindungsgemäßen Schichtstoffes, dadurch gekennzeichnet, dass ein Substrat, insbesondere eine Folie aus einem thermoplastischen Kunststoff, mit einer Farbschicht und/oder einer Lackschicht durch Drucken, insbesondere Siebdrucken, beschichtet und anschließend mittels Strahlenhärtung gehärtet wird.

In bevorzugten Ausführungsformen des erfindungsgemäßen Verfahrens kann dabei das Substrat vor dem Beschichten mit der Farbschicht und/oder Lackschicht oder der Schichtstoff nach dem Beschichten des Substrats mit der Farbschicht und/oder Lackschicht verformt werden. In Falle der Verformung des Schichtstoffs nach dem Beschichten des Substrats mit der Farbschicht und/oder Lackschicht zeigt der Schichtstoff nach der Verformung überraschend keine Rissbildung in der Farbschicht und keinerlei Ankleben am Verformungswerkzeug.

Bevorzugt weist der erfindungsgemäße Schichtstoff eine Gesamtdicke von Substrat und der Farb- bzw. Lackschicht von 0,05 bis 4 mm, besonders bevorzugt von 0,1 mm bis 2 mm, ganz besonders bevorzugt von 0,2 bis 2 mm auf. Erfindungsgemäß sind aber auch Schichtstoffe mit Gesamtschichtdicken von bis zu 20 mm, bevorzugt von bis zu 19 mm möglich.

Eine bevorzugte Realisierung der Erfindung besteht im Herstellen eines Schichtstoffes - nachstehend Formteil genannt - dergestalt, dass ein mit der erfindungsgemäßen Druckfarbe bedrucktes Substrat (erfindungsgemäßer Schichtstoff) auf der Bedruckungsseite durch Hinterfüllen, beispielsweise durch Hinterspritzen, mit einem (thermoplastischen) Kunststoff zu dem Formteil verarbeitet wird. Auf diese Weise lässt sich in der oben angegebenen Weise ein optimal gegen Abreiben geschütztes, bedrucktes, Objekt herstellen, bei welchem zudem das Schriftbild optimiert ist.

Gegenstand der vorliegenden Erfindung ist demnach weiterhin ein hinterfülltes Formteil, dadurch gekennzeichnet, dass ein erfindungsgemäßer Schichtstoff auf der mit der Druckfarbe oder dem Drucklack bedruckten Seite ein- oder mehrfach mit wenigstens einem thermoplastischen Kunststoff hinterfüllt ist, wobei der zum Hinterfüllen verwendete thermoplastische Kunststoff eine Temperatur von 200°C oder mehr aufweist.

Der erfindungsgemäße Schichtstoff kann dabei mit einer oder mehreren Schichten aus wenigstens einem thermoplastischen Kunststoff hinterfüllt sein.

Zur weiteren beispielhaften Offenbarung eines derartigen Formteils bzw. damit realisierten Objekts ergeht der Hinweis auf die prinzipielle Vorgehensweise gemäß EP 0 691 201 B1, insbesondere im Hinblick auf den Schichtaufbau, das verwendete Substrat sowie den weiteren thermoplastischen Kunststoff, ohne darauf beschränkt zu sein.

So sind beispielhafte Aufbauten von erfindungsgemäßen Formteilen exemplarisch in der EP 0 691 201 B1 beschrieben - ohne auf diese beschränkt zu sein - und können
1. eine vorzugsweise 0,02 mm bis 0,8 mm dicke ein oder mehrschichtige Folie aus thermoplastischem Kunststoff,
2. eine ein oder mehrschichtige Farbschicht vorzugsweise mit einer Dicke von 3 bis 50 mm,
3. gegebenenfalls wenigstens eine bei Raumtemperatur klebfreien Polyurethanschicht und
4. eine hinterfüllte thermoplastische Kunststoffschicht vorzugsweise einer Dicke von 0,1 mm bis 19 mm, die ihrerseits aus einer oder aus mehreren Kunststoffschichten besteht,
enthalten.

Dabei kann die thermoplastische Kunststoffschicht (4) durch Hinterfüllen der Schichten 1 + 2 bzw. 1 + 2 + 3 nach bekannten Verfahren (vgl. DE-OS 27 55 088) aufgebracht werden.

Solche Formteile aus den Schichten 1 + 2 + 4 und gegebenenfalls 3 können beispielsweise erhalten werden, indem Folien aus thermoplastischen Kunststoffen mit wenigstens einer Farbschicht und gegebenenfalls mit wenigstens einer Polyurethanschicht im Siebdruck beschichtet, anschließend oder vor Aufbringen der Polyurethanschicht verformt und schließlich mit einer thermoplastischen Kunststoffschicht in bekannter Weise hinterfüllt werden. Verbundfolien mit Polyurethanverklebung sind grundsätzlich bekannt (DE-OS 25 17 032 und DE-AS 30 10 143). Auch das Hinterfüllen von thermoplastischen Kunststoff-Folien mit thermoplastischen Kunststoffen mittels Hinterspritzen ist ebenfalls bekannt (DE-OS 27 55 088), ebenfalls das Hinterspritzen von thermoplastischen Folien mit einer Farbzwischenschicht (DE-OS 35 28 812).

Geeignete Substrate und thermoplastische Kunststoffe für solche Formteile sind dem Fachmann aus EP 0 691 201 B1 bekannt.

Der wesentliche Vorteil der vorliegenden Erfindung liegt darin, dass durch die zum Einsatz kommende Druckfarbe, für die das Polycarbonat in UV-härtbaren Monomeren gelöst wird, die einfache Strahlenhärtbarkeit, vorzugsweise UV-Härtbarkeit der Farbe ermöglicht, eine bessere Haftung der Farbe auf dem zu bedruckenden Substrat, eine Verformbarkeit dieses beschichteten Substrats ohne Beschädigung der Farbschicht sowie ein Hinterfüllen eines solchen beschichteten Substrats mit thermoplastischen Kunststoffen ohne Auswaschung oder Zerstörung der Farbschicht erzielt werden können.

Die Glasübergangstemperatur der Farbe, insbesondere die Glasübergangstemperatur des als Bindemittel eingesetzten Polycarbonats in der Farbe, kann sowohl unterhalb als auch oberhalb der Glasübergangstemperatur des Substrats liegen. Es kann aber von Vorteil sein, dass die Glasübergangstemperatur des als Bindemittel eingesetzten Polycarbonats oberhalb der Glasübergangstemperatur des Substrats liegt. Die Glasübergangstemperatur wird nach ISO 11357 bestimmt.

Das hinterfiillte Formteil wird erfindungsgemäß hergestellt, indem der erfindungsgemäße Schichtstoff auf der mit der Druckfarbe oder dem Drucklack bedruckten Seite ein- oder mehrfach bei einer Temperatur von 200°C oder höher mit wenigstens einem thermoplastischen Kunststoff hinterfüllt wird.

Das Hinterfüllen kann dabei beispielsweise mittels Hinterspritzen, Hinterpressen oder Hinterschäumen, bevorzugt mittels Hinterspritzen erfolgen. Derartige Verfahren zum Hinterfüllen sind dem Fachmann prinzipiell bekannt und in der Literatur beschrieben (vgl. z.B. DE-OS 27 55 088 oder in den Anwendungstechnischen Informationen ATI 7010 und ATI 7007 der Firma Bayer MaterialScience AG (vormals Bayer AG), welche öffentlich zugänglich sind und beispielsweise in der Zeitschrift "Kunststoffe", Ausgabe 9/99 veröffentlich wurden).

In einer ganz besonders bevorzugten Ausführungsform wird der erfindungsgemäße Schichtstoff auf der mit der Druckfarbe oder dem Drucklack bedruckten Seite mit einer Polyurethanschicht durch Drucken, insbesondere Siebdrucken, beschichtet und anschließend mit wenigstens einem thermoplastischen Kunststoff hinterfüllt.

Weitere Vorteile, Merkmale und Einzelheiten der vorliegenden Erfindung ergeben sich aus der nachfolgenden Beschreibung, eingeschlossen der darin offenbarten Strukturformeln, Rezepturen, Vorgehensweisen sowie Parametern. Diese gelten im Rahmen der vorliegenden Erfindung in beliebigen Kombinationen als zur Erfindung gehörig offenbart. Zur Vermeidung von Wiederholungen sollen stoffgemäß offenbarte Merkmale auch als verfahrensgemäß offenbart gelten und beanspruchbar sein. Ebenso sollen verfahrensgemäß offenbarte Merkmale auch als stoffgemäß offenbart gelten und beanspruchbar sein.

Bei dem Druckverfahren kann es sich beispielsweise um ein Siebdruck-, Rotationssiebdruck-, Tampondruck-, Offsetdruck-, Flexo-, Tiefdruck- oder Inkjet-Druckverfahren handeln. Bevorzugt ist das Siebdruckverfahren.

Die Härtung der Farbe wird vorzugsweise mit UV-Licht in einem Wellenlängenbereich von 200 bis 450 nm vorgenommen, die ausreichend ist, um eine vollständige Härtung der Druckfarbe oder des Drucklacks zu erzielen. Alternativ kann die Farbe oder der Lack auch ohne die Verwendung von Photoinitiatoren mit Elektronenstrahlen gehärtet werden. So ist im nachfolgenden, falls der Begriff "UV-härtbar" verwendet wird, die Härtung über eine andere Strahlung, z.B. Elektronenstrahlen, als Alternative mitzulesen.Außerdem können für die Trocknung der UV-härtbaren Farbe LED-Einheiten verwendet werden, welche nahezu monochromatisches Licht im UV-Licht-Bereich oder UV-Licht nahem Bereich abstrahlen.

Es kann die ganze Farbtonpalette verdruckt werden. Wenn mit Siebdruck gedruckt wird, wird vorzugsweise ein Siebdruckgewebe 100-40 bis 180-27, bevorzugt 140-34 oder 150-31 verwendet, was eine Farbschichtdicke von 5-12/µm zum Ergebnis hat. Die Härtung erfolgt je nach Druckaufgabe und Druckmaschine mit marktüblichen Quecksilber-Mitteldrucklampen bzw. -dotierten Lampen mit 80-400 W/cm, bevorzugt 120 bis 200 W/cm, die im Wesentlichen fokussiert sind. Die Belichtungszeit ist mit der Druckgeschwindigkeit gekoppelt, da die Druck- und die Belichtungsvorrichtung gekoppelt sind. Bei der Bedruckung der Folien ist eine übliche Druckgeschwindigkeit 1-50 Drucke/min.

Es werden (z.B. für das abriebfeste Dekorieren von Spritzgussteilen durch Folienhinterspritzung) Bindemittel benötigt, die bei den hohen Temperaturen des Spritzgießens nicht anschmelzen, gleichzeitig fest am Substrat haften und flexibel sind. Diese Anforderungen werden von speziellen hochwärmeformbeständigen Polycarbonaten erfüllt.

Zum Einsatz kommen daher vorzugsweise hochtemperaturbeständige flexible Druckfarben oder -Lacke, die
A) als Bindemittel mindestens ein nicht-strahlenhärtbares aromatisches Polycarbonat auf der Basis von geminal disubstituierten Dihydroxydiphenylcycloalkanen,und
B) als Lösungsmittel mindestens ein strahlenhärtbares Monomer, das ausgewählt ist aus der Gruppe Acrylate, Methacrylate, Vinylether und stickstoffhaltige Verbindungen mit einer ethylenischen Doppelbindung enthalten, dadurch gekennzeichnet, dass das Bindemittel in dem Lösemittel gelöst ist und das Lösemittel nach der Härtung in der Druckfarbe oder dem Drucklack in chemisch vernetzter Form eingebunden ist.

Geeignete Polycarbonate sind bevorzugt hochmolekulare, thermoplastische, aromatische Polycarbonate mit M_{w} (Gewichtsmittel des Molekulargewichts) von mindestens 10 000, vorzugsweise von 20 000 bis 300 000, die bifunktionelle Carbonatstruktureinheiten der Formel (I) enthalten, 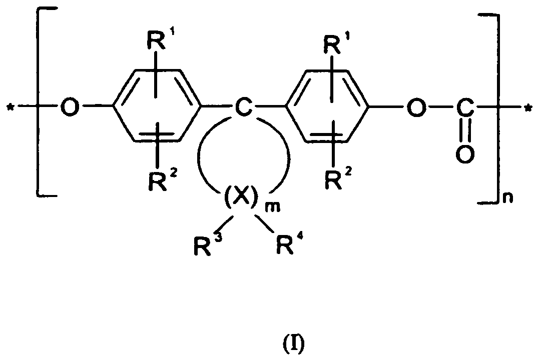 worin
- R¹ und R²: unabhängig voneinander Wasserstoff, Halogen, bevorzugt Chlor oder Brom, C₁-C₈-Alkyl, C₅-C₆-Cycloalkyl, C₆-C₁₀-Aryl, bevorzugt Phenyl, und C₇-C₁₂-Aralkyl, bevorzugt Phenyl-C₁-C₄-Alkyl, insbesondere Benzyl,
- m: eine ganze Zahl von 4 bis 7, bevorzugt 4 oder 5,
- R³ und R⁴: für jedes X, individuell wählbar, unabhängig voneinander Wasserstoff oder C₁-C₆-Alkyl und
- X: Kohlenstoff bedeuten,und
- n: eine ganze Zahl von 30 oder größer, besonders bevorzugt eine ganze Zahl von 50 bis 900, ganz besonders bevorzugt eine ganze Zahl von 60 bis 250 bedeutet,
mit der Maßgabe, dass an mindestens einem Atom X R³ und R⁴ gleichzeitig Alkyl bedeuten.

Ausgangsprodukte für die Polycarbonate sind Dihydroxydiphenylcycloalkane der Formel (Ia) 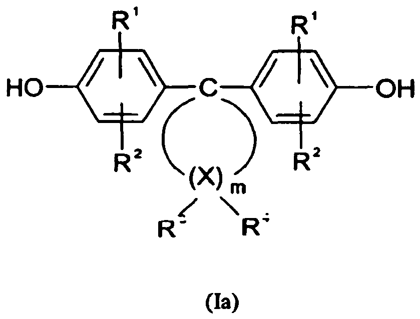 worin
X, R¹, R², R³, R⁴, m und n die für die Formel (I) genannte Bedeutung haben.

Bevorzugt sind an ein bis zwei Atomen X, insbesondere nur an einem Atom X R³ und R⁴ gleichzeitig Alkyl.

Bevorzugter Alkylrest ist Methyl; die X-Atome in alpha -Stellung zu dem Diphenylsubstituierten C-Atom (C-1) sind bevorzugt nicht dialkylsubstituiert, dagegen ist die Alkyldisubstitution in beta - Stellung zu C-1 bevorzugt.

Bevorzugt sind Dihydroxydiphenylcycloalkane mit 5 und 6 Ring-C-Atomen im cycloaliphatischen Rest (m = 4 oder 5 in Formel (Ia)), beispielsweise die Diphenole der Formeln (Ib) bis (Id), 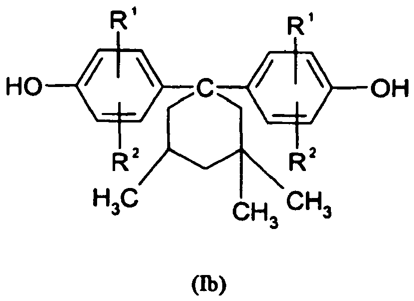 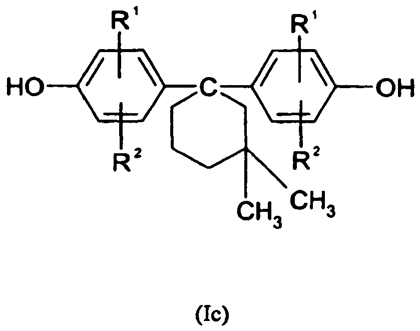 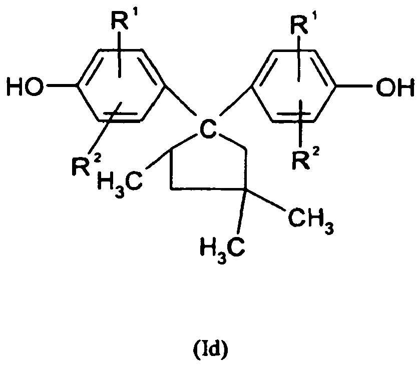 wobei das 1,1-Bis-(4-hydroxyphenyl)-3,3,5-trimethylcyclohexan (Formel (Ib) mit R¹ und R² gleich H) besonders bevorzugt ist. Die Polycarbonate können gemäss der deutschen Patentanmeldung Nr. P 3 832 396.6 bzw. EP-A 0 359 953 aus Diphenolen der Formel (Ia) hergestellt werden.

Es können sowohl ein Diphenol der Formel (Ia) unter Bildung von Homopolycarbonaten als auch mehrere Diphenole der Formel (Ia) unter Bildung von Copolycarbonaten verwendet werden.

Außerdem können die Diphenole der Formel (Ia) auch im Gemisch mit anderen Diphenolen, beispielsweise mit denen der Formel (Ie)

HO-Z-OH (Ie),

zur Herstellung von hochmolekularen, thermoplastischen, aromatischen Polycarbonaten verwendet werden.

Geeignete andere Diphenole der Formel (Ie) sind solche, in denen Z ein aromatischer Rest mit 6 bis 30 C-Atomen ist, der einen oder mehrere aromatische Kerne enthalten kann, substituiert sein kann und aliphatische Reste oder andere cycloaliphatische Reste als die der Formel (Ia) oder Heteroatome als Brückenglieder enthalten kann.

Beispiele der Diphenole der Formel (Ie) sind: Hydrochinon, Resorcin, Dihydroxydiphenyle, Bis-(hydroxyphenyl)-alkane, Bis-(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, alpha , alpha '-Bis-(hydroxyphenyl)-diisopropylbenzole sowie deren kernalkylierte und kernhalogenierte Verbindungen.

Diese und weitere geeignete Diphenole sind z.B. in den US-A 3 028 365, 2 999 835, 3 148 172, 3 275 601, 2 991 273, 3 271 367. 3 062 781, 2 970 131 und 2 999 846, in den DE-A 1 570 703, 2 063 050, 2 063 052, 2 211 956, der Fr-A 1 561 518 und in der Monographie "H. Schnell, Chemistry and Physics of Polycarbonates, Interscience Publishers, New York 1964", beschrieben.

Bevorzugte andere Diphenole sind beispielsweise: 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan, alpha , alpha -Bis-(4-hydroxyphenyl)-p-düsopropylbenzol, 2,2-Bis-(3-methyl-4-hydroxyphenyl)-propan, 2,2-Bis-(3-chlor-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-dimethyl-4-hydroxyphenyl)-sulfon, 2,4-Bis-(3,5-dimethyl-4-hydroxyphenyl)-2-methylbutan, 1,1-Bis-(3,5-dimethyl-4-hydroxyphenyl)-cyclohexan, alpha , alpha -Bis-(3,5-dimethyl-4-hydroxyphenyl)-p-diisopropylbenzol, 2,2-Bis-(3,5-dichlor-4-hydroxyphenyl)-propan und 2,2-Bis-(3,5-dibrom-4-hydroxyphenyl)-propan.

Besonders bevorzugte Diphenole der Formel (Ie) sind beispielsweise: 2,2-Bis-(4-hydroxyphenyl)-propan, 2,2-Bis-(3,5-dimethyl-4-hydroxyphenyl)-propan, 2,2-Bis-(3,5-dichlor-4-hydroxyphenyl)-propan, 2,2-Bis-(3,5-dibrom-4-hydroxyphenyl)-propan und 1,1-Bis-(4-hydroxyphenyl)-cyclohexan.

Insbesondere ist 2,2-Bis-(4-hydroxyphenyl)-propan bevorzugt. Die anderen Diphenole können sowohl einzeln als auch im Gemisch eingesetzt werden.

Das molare Verhältnis von Diphenolen der Formel (Ia) zu den gegebenenfalls mitzuverwendenden anderen Diphenolen der Formel (Ie), soll zwischen 100 Mol% (Ia) zu 0 Mol-% (Ie) und 2 Mol-% (Ia) zu 98 Mol-% (Ie), vorzugsweise zwischen 100 Mol% (Ia) zu 0 Mol% (Ie) und 10 Mol-% (Ia) zu 90 Mol-% (Ie) und insbesondere zwischen 100 Mol-% (Ia) zu 0 Mol-% (Ie) und 30 Mol-% (Ia) zu 70 Mol% (Ie) liegen.

Die hochmolekularen Polycarbonate aus den Diphenolen der Formel (Ia), gegebenenfalls in Kombination mit anderen Diphenolen, können nach den bekannten Polycarbonat-Herstellungsverfahren hergestellt werden. Dabei können die verschiedenen Diphenole sowohl statistisch als auch blockweise miteinander verknüpft sein.

Die erfindungsgemäßen Polycarbonate können in an sich bekannter Weise verzweigt sein. Wenn die Verzweigung gewünscht wird, kann sich in bekannter Weise durch Einkondensieren geringer Mengen, vorzugsweise Mengen zwischen 0,05 und 2,0 Mol-% (bezogen auf eingesetzte Diphenole), an drei- oder mehr als dreifunktionellen Verbindungen, insbesondere solchen mit drei oder mehr als drei phenolischen Hydroxylgruppen, erreicht werden. Geeignete Verzweiger mit drei oder mehr als drei phenolischen Hydroxylgruppen sind:

Phloroglucin, 4,6-Dimethyl-2,4,6-tri-(4-hydroxyphenyl)-hepten-2, 4,6-Dimethyl-2,4,6-tri-(4-hydroxyphenyl)-heptan, 1,3,5-Tri-(4-hydroxyphenyl)-benzol, 1,1,1-Tri-(4-hydroxyphenyl)-ethan, Tri-(4-hydroxyphenyl)-phenylmethan, 2,2-Bis-[4,4-bis-(4-hydroxyphenyl)-cyclohexyl]-propan, 2,4-Bis-(4-hydroxyphenyl-isopropyl)-phenol, 2,6-Bis-(2-hydroxy-5-methyl-benzyl)-4-methylphenol, 2-(4-hydroxyphenyl)-2-(2,4-dihydroxyphenyl)-propan, Hexa-[4-(4-hydroxyphenyl-isopropyl)-phenyl]-orthoterephthalsäureester, Tetra-(4-hydroxyphenyl)-methan, Tetra-[4-(4-hydroxyphenylisopropyl)phenoxy]-methan und 1,4-Bis-[4',4"-dihydroxytriphenyl)-methyl]-benzol.

Einige der sonstigen dreifunktionellen Verbindungen sind 2,4-Dihydroxybenzoesäure, Trimesinsäure, Cyanurchlorid und 3,3-Bis-(3-methyl-4-hydroxyphenyl)-2-oxo-2,3-dihydroindol.

Als Kettenabbrecher zur an sich bekannten Regelung des Molekulargewichts der Polycarbonate dienen monofunktionelle Verbindungen in üblichen Konzentraten. Geeignete Verbindungen sind z.B. Phenol, tert.-Butylphenole oder andere Alkyl-substituierte Phenole. Zur Regelung des Molekulargewichts sind insbesondere kleine Mengen Phenole der Formel (If) geeignet 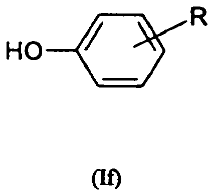 worin
R einen verzweigten C₈- und/oder C₉-Alkylrest darstellt.

Bevorzugt ist im Alkylrest R der Anteil an CH₃-Protonen zwischen 47 und 89 % und der Anteil der CH- und CH₂-Protonen zwischen 53 und 11 %; ebenfalls bevorzugt ist R in o- und/oder p-Stellung zur OH-Gruppe, und besonders bevorzugt die obere Grenze des ortho-Anteils 20 %. Die Kettenabbrecher werden im allgemeinen in Mengen von 0,5 bis 10, bevorzugt 1,5 bis 8 Mol-%, bezogen auf eingesetzte Diphenole, eingesetzt.

Die Polycarbonate können vorzugsweise nach dem Phasengrenzflächenverhalten (vgl. H. Schnell "Chemistry and Physics of Polycarbonates", Polymer Reviews, Vol. IX, Seite 33ff., Interscience Publ. 1964) in an sich bekannter Weise hergestellt werden.

Hierbei werden die Diphenole der Formel (Ia) in wässrig alkalischen Phase gelöst. Zur Herstellung von Copolycarbonaten mit anderen Diphenolen werden Gemische von Diphenolen der Formel (Ia) und den anderen Diphenolen, beispielsweise denen der Formel (Ie), eingesetzt. Zur Regulierung des Molekulargewichts können Kettenabbrecher z.B. der Formel (If) zugegeben werden. Dann wird in Gegenwart einer inerten, vorzugsweise Polycarbonat lösenden, organischen Phase mit Phosgen nach der Methode der Phasengrenzflächenkondensation umgesetzt. Die Reaktionstemperatur liegt zwischen 0°C und 40°C.

Die gegebenenfalls mitverwendeten Verzweiger (bevorzugt 0,05 bis 2,0 Mol-%) können entweder mit den Diphenolen in der wässrig alkalischen Phase vorgelegt werden oder in dem organischen Lösungsmittel gelöst vor Phosgenierung zugegeben werden. Neben den Diphenolen der Formel (Ia) und gegebenenfalls anderen Diphenolen (Ie) können auch deren Mono- und/oder Bischlorkohlensäureester mitverwendet werden, wobei diese in organischen Lösungsmitteln gelöst zugegeben werden. Die Menge an Kettenabbrechern sowie an Verzweigern richtet sich dann nach der molaren Menge von Diphenolat-Resten entsprechend Formel (Ia) und gegebenenfalls Formel (Ie); bei Mitverwendung von Chlorkohlensäureestern kann die Phosgenmenge in bekannter Weise entsprechend reduziert werden.

Geeignete organische Lösungsmittel für die Kettenabbrecher sowie gegebenenfalls für die Verzweiger und die Chlorkohlensäureester sind beispielsweise Methylenchlorid, Chlorbenzol, insbesondere Mischungen aus Methylenchlorid und Chlorbenzol. Gegebenenfalls können die verwendeten Kettenabbrecher und Verzweiger im gleichen Solvens gelöst werden.

Als organische Phase für die Phasengrenzflächenpolykondensation dient beispielsweise Methylenchlorid, Chlorbenzol sowie Mischungen aus Methylenchlorid und Chlorbenzol.

Als wässrige alkalische Phase dient beispielsweise NaOH-Lösung. Die Herstellung der Polycarbonate nach dem Phasengrenzflächenverfahren kann in üblicher Weise durch Katalysatoren wie tertiäre Amine, insbesondere tertiäre aliphatische Amine wie Tributylamin oder Triethylamin katalysiert werden; die Katalysatoren können in Mengen von 0,05 bis 10 Mol-%, bezogen auf Mole an eingesetzten Diphenolen, eingesetzt werden. Die Katalysatoren können vor Beginn der Phosgenierung oder während oder auch nach der Phosgenierung zugesetzt werden.

Die Polycarbonate können nach dem bekannten Verfahren in homogener Phase, dem sogenannten "Pyridinverfahren" sowie nach dem bekannten Schmelzeumesterungsverfahren unter Verwendung von beispielsweise Diphenylcarbonat anstelle von Phosgen hergestellt werden.

Die Polycarbonate haben bevorzugt Molekulargewicht M_{w} (Gewichtsmittel, ermittelt durch Gelchromatographie nach vorheriger Eichung) von mindestens 10 000, besonders bevorzugt von 20 000 bis 300 000 und insbesondere von 20 000 bis 80 000. Sie können linear oder verzweigt sein, sie sind Homopolycarbonate oder Copolycarbonate auf Basis der Diphenole der Formel (Ia).

Durch den Einbau der Diphenole der Formel (Ia) sind neue Polycarbonate mit hoher Wärmeformbeständigkeit entstanden, die auch sonst ein gutes Eigenschaftsbild haben. Dies gilt insbesondere für die Polycarbonate auf Basis der Diphenole der Formel (Ia), in denen m 4 oder 5 ist und ganz besonders für die Polycarbonate auf Basis der Diphenole (Ib), worin R¹ und R² unabhängig voneinander die für die Formel (Ia) genannte Bedeutung haben und besonders bevorzugt Wasserstoff sind.

Die besonders bevorzugten Polycarbonate sind also solche, in denen Struktureinheiten der Formel (I) m = 4 oder 5 ist ganz besonders solche aus Einheiten der Formel (Ig) 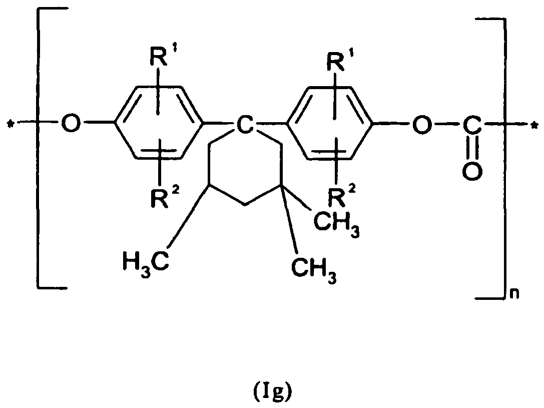 worin R¹, R² und n die für Formel (I) genannte Bedeutung haben, besonders bevorzugt aber Wasserstoff sind.

Diese Polycarbonate auf Basis der Diphenole der Formel (Ib), worin insbesondere R¹ und R² Wasserstoff sind, besitzen zur hohen Wärmeformbeständigkeit ausserdem eine gute UV-Stabilität und ein gutes Fliessverhalten in der Schmelze, was nicht zu erwarten war, und zeigen sehr gute Löslichkeit in den unten genannten Monomeren.

Durch die beliebige Komposition mit anderen Diphenolen, insbesondere mit denen der Formel (Ie) lassen sich zudem die Polycarbonateigenschaften in günstiger Weise variieren. In solchen Copolycarbonaten sind die Diphenole der Formel (Ia) in Mengen von 100 Mol-% bis 2 Mol-%, vorzugsweise in Mengen von 100 Mol-% bis 10 Mol-% und insbesondere in Mengen von 100 Mol-% bis 30 Mol-%, bezogen auf die Gesamtmenge von 100 Mol-% an Diphenoleinheiten, in Polycarbonaten enthalten.

Besonders bevorzugte Polycarbonate sind Copolycarbonate der Formel (I-h), wobei die Comonomeren alternierend, blockartig oder zufällig im Copolymeren angeordnet sein können, p + q = n ist und das Verhältnis von q und p zueinander sich so verhält, wie die im vorangehenden Abschnitt genannten Mol-%-Angaben für die Formeln (Ie) und (Ia) dies widerspiegeln.

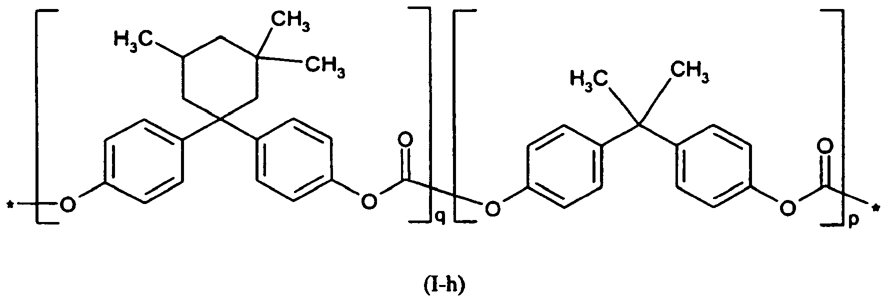

Zur Herstellung der Druckfarbe oder des Drucklackes für die Beschichtung des Substrats mit der Farb-oder Lackschicht wird das verwendete Copolycarbonat in einem oder mehreren UV-härtbaren Monomeren gelöst, welche vernetzbar sind, z.B. auf Grund von zur Polymerisation geeigneten Acrylatgruppen oder ethylenisch ungesättigten Gruppen. Bevorzugt handelt es sich bei diesen Monomeren um monofunktionelle Acrylate. Es können jedoch auch Di-, Tri- oder höher funktionelle Acrylate oder Methacrylate verwendet werden.

Diese UV-härtbaren bzw. strahlenhärtbaren Monomere dienen zur Lösung des Polycarbonats, beruhen jedoch verglichen mit den Lösemitteln wie sie z.B. in der EP 0 688 839 B1 eingesetzt und verstanden werden, auf einem anderen Prinzip. Die Lösemittel im herkömmlichen Sinne, wie sie z.B. in der EP 0 688 839 B1 verwendet werden, dienen ausschließlich zum Lösen des Polycarbonats. Durch die anschließende Trocknung der Farbe sollen die Lösemittel möglichst vollständig, d.h zu nahezu 100%, verdunsten und haben somit keine filmbildenden Eigenschaften. Bei der vorliegenden Erfindung jedoch werden vernetzbare Monomere eingesetzt, die das Polycarbonat auch lösen sollen, aber sie verbleiben bestenfalls zu 100% in der Farbe, so dass sie maßgeblich auf die Eigenschaften der gehärteten Farbe Einfluß nehmen und die Filmeigenschaften entscheidend beeinflussen. Die Flüchtigkeit der strahlenhärtbaren Monomere sollte vorzugsweise unter 5 %, ganz bevorzugt unter 1 %, sein.

Beispielsweise, ohne darauf beschränkt zu sein, können als vernetzbare Monomere Isobomyl(meth)acrylat (IBO(M)A), 2-Phenylethyl(meth)acrylat (PE(M)A), ethoxylierte 2-Phenylethoxyacrylate, methoxylierte Polyethylenglykolmono(meth)acrylate, alkoxyliertes Tetrahydrofurfuryl(meth)acrylat, alkoxyliertes Laurylacrylat, alkoxyliertes Phenylacrylat, Stearyl(meth)acrylat, Lauryl(meth)acrylat, Isodecyl(meth)acrylat, Isooctylacrylat, Octylacrylat, Tridecyl(meth)acrylat, Caprolactonacrylat, ethoxyliertes oder alkoxyliertes Nonylphenol(meth)acrylat, cyclisches Trimethylolpropanformalacrylat, Glicidylmethacrylat, Propylenglykolmonomethacrylat, 2-(2-Ethoxyethoxy)ethylacrylat (EOEOEA), Methylmethacrylat (MMA), propoxyliertes Allylmethacrylat, ethoxylierte Hydroxyethylmethacrylate, Ethoxytriglykolmethacrylat, 1,6-Hexandioldi(meth)acrylat (HDD(M)A), alkoxylierte Hexandioldiacrylate, alkoxylierte Cyclohexandimethanoldi(meth)acrylate, 1,3-Butylenglykoldi(meth)acrylat, 1,4 Butandioldi(meth)acrylat, Diethylenglykoldi(meth)acrylat, Polyethylenglykol(200)Diacrylat, Polyethylenglykol(400)Di(meth)acrylat, Polyethylenglykol(600)Di(meth)acrylat, Ethoxylierte Bisphenol A Di(meth)acrylate, Tetraethylenglykoldi(meth)acrylat, Triethylenglykoldi(meth)acrylat, Ethylenglykoldimethacrylat, Polyethylenglykoldimethacrylat, Dipropylenglykoldiacrylat (DPGDA), alkoxyliertes Neopentylglykoldi(meth)acrylat, propoxyliertes Trimethylolpropantriacrylat, Trimethylolpropantri(meth)acrylat, propoxyliertes Glyceryltriacrylat GPTA), Dipentaerythrithexaacrylat (DPHA), Tripropylenglykoldiacrylat (TPGDA), Dipentaerythritpentaacrylat (DiPEPA), Pentaerythrittriacrylat (PETLA), (ethoxyliertes) Pentaerythrittetraacrylat, Ditrimethylpropantetraacrylat, Trimethylpropantriacrylat (TMPEOTA), Tricyclodecandimethanoldiacrylat (TCDDMDA), Dipentaerythritpentaacrylat, niedermolekulare monofunktionelle Urethanacrylate, niedermolekulare Epoxyacrylate, Hydroxypropylmethacrylat (HPMA) verwendet werden.

Ganz besonders bevorzugt sind aus der vorhergehenden Aufzählung 2-Phenylethyl(meth)acrylat (PE(M)A), ethoxylierte 2-Phenylethoxyacrylate, Tetrahydrofurfurylmethacrylat, 2-(2-Ethoxyethoxy)ethylacrylat (EOEOEA), Methylmethacrylat (MMA), 1,6-Hexandioldiacrylat (HDDA).

Des Weiteren können verschiedene Vinylether als vernetzbare Monomere verwendet werden wie z.B., ohne darauf beschränkt zu sein, Diethylenglykoldivinylether (DVE-2) oder Triethylenglykoldivinylether (DVE-3).

Beispiele, ohne darauf beschränkt zu sein, für die Verbindungen mit einer ethylenisch ungesättigten Bindung sind N-Vinylpyrrolidon (NVP), N-Vinylcaprolactam, N-Vinylformamid (NVF) oder Acrylmorpholin (ACMO). Aus bekannten Gesundheitsgründen sollte dabei auf die Verwendung von N-Vinylpyrrolidon (NVP) möglichst verzichtet werden.

Im Allgemeinen werden dem Bindemittel für Druckfarben oder Lacke ein oder mehrere zusätzliche UV-härtbare oder strahlenhärtbare Monomere zugesetzt. Bei diesen UV-härtbaren Monomeren, die ebenfalls gehärtet werden, kann es sich um die oben im Zusammenhang mit der Copolycarbonatlösung erörterten UV-härtbaren Monomere bandeln. Die Gesamtmenge an UV-härtbaren Monomeren beträgt im allgemeinen 1-99 Gew.%, bevorzugt 25 bis 85 Gew.%, insbesondere 50 bis 85 Gew.%.

Der Prozess der Vernetzung der Monomere erfolgt beispielsweise über UV-Härtung, LED-Härtung oder Elektronenstrahl-Härtung. Diese sind bereits aus der Literatur bekannt und in verschiedenen anderen Anwendungen, wie zum Beispiel bei der Bedruckung von optischen Speichermedien, Stand der Technik.

Der Prozess der Strahlenhärtung kann durch die vorliegende Erfindung mit seinen beschriebenen Vorteilen mit dem Prozess der In-mould-Technik, im speziellen der Insert-mould-Technik kombiniert werden.

Vorzugsweise wird der Druckfarbe oder dem Drucklack kein flüchtiges organisches Lösemittel zugesetzt. Trotzdem kann in Ausnahmefällen flüchtiges Lösemittel zugesetzt werden, um die Druckfarbe oder den Drucklack für spezielle Anwendungen zu optimieren. Auch durch die Zugabe von Additiven können geringe Mengen von Lösemitteln in die Farbe eingeschleppt werden, da eine Vielzahl der auf dem Markt erhältlichen Wirkstoffe in Lösemitteln gelöst oder durch diese verdünnt werden. In der Druckfarbe oder dem Drucklack sollten maximal 10%, bevorzugt maximal 5%, flüchtige organische Lösemittel eingesetzt werden. Besonders bevorzugt wird aber auf die Verwendung der flüchtigen organischen Lösemittel verzichtet.

Weiter kann die Druckfarbe oder der Drucklack zusätzlich zu dem verwendeten Polycarbonat mindestens ein weiteres Harz enthalten.

Die Harze können aus einer großen Vielfalt von Harzen ausgewählt sein. Beispiele sind, ohne darauf beschränkt zu sein: Epoxidharze, Polyesterharze, Celluloseharze, Methylmethacrylat-Copolymere (z.B. Paraloid B-48N, Paraloid B60, Paraloid B-82 von Rohm & Haas Deutschland GmbH, In der Krön 4, D 60489 Frankfurt, Neocryl B-810 von Neoresins Lurgiallee 6-8, D-60439 Frankfurt/Main); Ethylmethacrylat (z.B. Paraloid B 72 von Rohm & Haas); Butylmethacrylat-Copolymere (z.B. Degalan LP 65/12, Degalan LP 68/04 von Röhm GmbH & Co KG, Kirschenallee); flüssige Epoxidharze (z.B. Polypox E 064 von UPPC AG, Schemmerbergerstr. 39, D-88487 Mietingen, Rütapox-Harz 0164 von Bakelite AG, Araldit GY 250 von Vantico); ungesättigte Polyesterharze (z.B. Haftharz LTH von Degussa Chemiepark Mari, Paul-Baumann-Str. 1, 45764 Mari); gesättigte Polyesterharze (Dynapol L 912, Dynapol L 952 von Degussa). Derartige zusätzliche Harze können beispielsweise in einer Menge von 0 bis 50 Gew.% Trockengewicht, bezogen auf die Gesamtmasse der Farbe oder des Lacks, bevorzugt von 0 bis 20 Gew.%, besonders bevorzugt 0 bis 5 Gew.% vorliegen, um bestimmte Eigenschaften wie z.B. die Haftung zu optimieren. Allerdings sollte man hinsichtlich der Zugabemenge dieser zusätzlichen Passiv- oder Inertharze, welche sich chemisch von dem verwendeten Polycarbonat als Hauptharz abgrenzen, beachten, dass sie in der Regel die Gefahr des Auswaschens der Farbe beim Hinterspritzen verstärken.

Die Farben oder Lacke enthalten vorzugsweise mindestens einen Photoinitiator, gewöhnlich zwei und möglicherweise drei oder mehr Photoinitiatoren, um die Oberflächen- und Tiefenhärtung (Vernetzung) der Farbe mit UV-Licht einzuleiten. Bevorzugt werden Photoinitiatoren mit möglichst geringer Neigung zur Migration und Flüchtigkeit, um negative Erscheinungen wie Delamination der Farbe vom Spritzgut zu vermeiden. Außerdem sollten die verwendeten Photoinitiatoren eine möglichst geringe Neigung zum Vergilben zeigen, damit sich die Farbe des Bauteils nicht verändert und/oder verfälscht wird.

Sie können aus den üblichen in UV-härtenden Druckfarben und -lacken usw. verwendeten Photoinitiatoren ausgewählt werden. Beispielsweise, ohne darauf beschränkt zu sein, 1-Hydroxycyclohexylacetophenon (Irgacure^{®} 184 von Ciba Spezialitätenchemie AG, Klybeckstrasse 141, Postfach, CH-4002 Basel), 2-Methyl-1-[4-(methylthiophenyl)-2-morpholinopropan]-1-on (Irgacure^{®} 907 von Ciba), 2-Hydroxy-1-[4-(2-hydroxyethoxy)phenyl]-2-methyl-1-propanon (Irgacure^{®} 2959 von Ciba), α-Dimethoxy-α-phenylacetophenon (Irgacure^{®} 651 von Ciba), 2-Benzyl-2-dimethylamino-1-(4-morpholinophenyl)butan-1-on (Irgacure^{®} 369 von Ciba), Bis(2,4,6-trimethylbenzoyl)phenylphosphinoxid (Irgacure^{®} 819 von Ciba), 2-Hydroxy-2-methyl-1-phenyl-1-propanon (Darocur^{®} 1173 von Ciba), Isopropylthioxanthon (ITX von Lambson), 2-Chlorthioxanthon (CTX von Lambson), Benzophenon, 2,4,6-Trimethylbenzoldiphenylphosphinoxid (TPO von BASF), Ethyl-2,4,6-trimethylbenzoylphenylphosphinat (TPO-L von BASF) und Methylbenzoylformiat (MBF von Lambson).

Die Zugabemenge hängt stark von der Wahl des Druckverfahrens und der Art der verwendeten Photoinitiatoren ab.

Die Gesamtmenge an Photoinitiatoren beträgt im allgemeinen 1 bis 20 Gew.%, bevorzugt 2 bis 10 Gew.%, besonders bevorzugt 3-7% bezogen auf die Gesamtmasse der Druckfarbe oder des Drucklacks.

Zusätzlich können auch Co-Initiatoren wie Amine (z.B. MDEA von BASF Aktiengesellschaft, Carl-Bosch-Straße 38, 67056 Ludwigshafen) oder aminmodifizierte Acrylate (z.B. Ebecryl P115, Ebecryl 7100 von Surface Specialities UCB; Actilane 705, Actilane 715, Actilane 755 von Akzo Nobel Resins bv., Verkaufsbüro Deutschland, Industriestr. 8. 46446 Emmerich; Laromer PO 94 F, Laromer LR 8869 von BASF; Craynor503, Craynor 550 von Cray Valley; Photomer 4775F von Cognis) in Mengen von 0,5 bis 20 Gew.%, bezogen auf die Gesamtmasse der Druckfarbe oder des Drucklacks in Abhängigkeit des Druckverfahrens und der Art der verwendeten Photoinitiatoren eingesetzt werden.

Bevorzugt werden Bis(2,4,6-trimethylbenzoyl)phenylphosphinoxid (Irgacure^{®} 819 von Ciba), 2-Hydroxy-2-methyl-1-phenyl-1-propanon (Darocur^{®} 1173 von Ciba) und Trimethylbenzoldiphenylphosphinoxid (TPO von BASF) eingesetzt.

Auch ein Verdicker kann in der Druckfarbe oder dem Lack enthalten sein und ebenfalls aus üblichen für diesen Zweck in Druckfarben und/oder Drucklacken verwendeten Materialien ausgewählt sein. Dazu zählen zum Beispiel, ohne darauf beschränkt zu sein, pyrogene Kieselsäure, strukturmodifizierte mit Methacrylsilan nachbehandelte Schichtsilikate und Rizinusölderivate sowie Lösungen von modifizierten Harnstoffen oder Polyhydroxycarboxylsäureamiden. Die eingesetzte Menge an Verdicker(n) liegt gewöhnlich im Bereich von 0 bis 10 Gew.%, bevorzugt 0,5 bis 5 Gew.% und insbesondere 1,5 bis 3 Gew.%, bezogen auf die Gesamtmasse der Druckfarbe bzw. des Drucklacks.

Im Allgemeinen enthält die Druckfarbe oder Lack auch einen Entschäumer und/oder ein Verlaufmittel.

Entschäumer können z.B., ohne darauf beschränkt zu sein, aus modifizierten Acrylaten oder modifizierten Acrylatcopolymeren, aber auch aus silikonhaltigen Verbindungen ausgewählt sein. Verlaufmittel umfassen beispielsweise modifizierte Polyacrylate und Polysiloxane.

Im Allgemeinen, allerdings abhängig vom Druckverfahren und der Type der verwendeten Entschäumern und/oder Verlaufsmittel, werden sie in einer Menge von 0,1 bis 2,5 Gew.% bezogen auf die Gesamtmasse der Druckfarbe bzw. des Lacks eingesetzt.

Bevorzugte Verwendung finden bei den Entschäumern und Verlaufmitteln silikonfreie Produkte, um eine Migration dieser Verbindungen und die dadurch mögliche Delamination des Spritzguts von der Farbe zu vermeiden.

Als Stabilisatoren werden, ohne darauf beschränkt zu sein, bevorzugt Genorad 16 von der Fa. Rahn und Fluorstab UV2 von der Fa. Kromachem, 10, Park Industrial Centre, Tolpits Lane, Watford, Hertfordshire WD1 8SP, UK, verwendet.

Die Druckfarbe bzw. der Drucklack kann einen oder mehrere Füllstoffe umfassen. Eingesetzt werden diese Füllstoffe zur Reduzierung des Preises und um die Fließeigenschaften der Druckfarbe und/oder des Drucklacks zu optimieren.

Die Beschaffenheit der Füllstoffe ist nicht besonders kritisch. Sie können aus üblichen in Druckfarben verwendeten Füllstoffen ausgewählt sein, wie beispielsweise, ohne darauf beschränkt zu sein, China Clay, Bariumsulfat (in gefällter Form als Blanc fixe), Calciumcarbonat, Zinksulfid, Kieselerde, Talkum, Aluminiumsilicat, Aluminiumhydroxid und/oder Kieselsäure. Die Menge an eingesetztem Füllstoff liegt im allgemeinen im Bereich von 0 bis 50 Gew.%, bevorzugt 0 bis 30 Gew.%, z.B. 20 Gew.%, bezogen auf die Gesamtrmasse der Druckfarbe oder des Lacks.

Bei den Pigmenten, die in der Druckfarbe vorzugsweise enthalten sind, kann es sich um beliebige Pigmente handeln. Verwendet werden können z.B., ohne darauf beschränkt zu sein, Titandioxid, Zinksulfid, Pigmentruß, Azodiarylgelb, Isoindolgelb, Diarylidorange, Chinacridonmagenta, Diketopyrrolorot, Kupferphthalocyaninblau, Kupferphthalo-cyaningrün, Dioxazinviolett und Diketometalloxid.

Eine ziemlich umfassende Auflistung weiterer einsetzbarer Pigmente ist im Colour Index International, Fourth Edition Online, 2001, veröffentlicht von der Society of Dyers and Colourists in Verbindung mit der American Association of Textile Chemists and Colorists zu finden.

Es können auch Effektpigmente wie, ohne darauf beschränkt zu sein, Metalloxid-beschichtete Glimmer und Metallicpigmente, eingesetzt werden. Die Menge an Buntpigment beträgt gewöhnlich 1 bis 50 Gew.%, bevorzugt 3 bis 45 Gew.%, bezogen auf das Gewicht der Druckfarbe, abhängig von der Art des Pigments, der gewünschten Deckkraft und vom gewählten Druckverfahren. Weißpigment wird gewöhnlich in einer Menge von 20 bis 50 Gew.%, bevorzugt 25 bis 45 Gew.%, eingesetzt. Die Buntpigmente werden i.d.R in einer Menge von 1 bis 20 Gew.%, abhängig von der Art und des Farbtons sowie des verwendeten Druckverfahrens, eingesetzt.

Metalloxid-beschichtete Glimmer und Metalliepigmente, werden i.d.R. in einer Menge von 1 bis 20 Gew.-%, abhängig von der Art und des Farbtons sowie des verwendeten Druckverfahrens, eingesetzt.

Alle verwendeten Pigmente müssen sehr temperaturstabil sein und sich durch die entstehende Temperatur beim Hinterspritzen nicht zersetzen, sublimieren oder den Farbton verändern.

Zur Verbesserung der Farbeigenschaften können außerdem Wachse zugegeben werden. Geeignete Wachse sind im Handel erhältlich. Insbesondere in Frage kommen nachstehend aufgeführte Wachse, wobei beispielhaft zu den jeweiligen Wachsen im Handel erhältliche Produkte genannt sind; die jeweilige Bezugsquelle findet sich in Klammern angegeben:

### Polyethylenwachse:

Ceraflow 990 (Byk-Cera; Danzigweg 23; 7418 EN Deventer Netherlands), Ceraflour 991 (Byk-Cera; Danzigweg 23; 7418 EN Deventer Netherlands), Printwax ME 0825 (Deurex Micro-Technologies GmbH; Dr. Bergius Strasse 18/20; 06729 Tröglitz Germany)

### Modifizierte Polyethylenwachse:

Ceraflour 961 (Dyk-Cera; Danzigweg 23; 7418 EN Ueventer Netherlands), Everglide UV 961 25% (Krahn-Chemie GmbH; Grimm 10; 20457 Hamburg Germany)

### High Density Polyethylen-Wachse:

Ceraflour 950 (Byk-Cera; Danzigweg 23; 7418 EN Deventer Netherlands)

### Polymer-Kieselsäure-Verbindungen:

Deuteron MM 659 (Deuteron GmbH; in den Ellern 2; 28832 Achim Germany)

### Mikronisierte Polyolefin-Wachse:

Micro Wax DM (Finma-Chemie GmbH, Theodor-Heuss-Strasse 5; 61191 Rosbach Germany), Micro Wax HTDM (Finma-Chemie GmbH, Theodor-Heuss-Strasse 5; 61191 Rosbach Gennany)

### Fischer-Tropsch-Wachse:

Ceraflour 940 (Byk-Cera; Danzigweg 23; 7418 EN Deventer Netherlands)

### Mikronisierte Polytetrafluoroethylen-Wachse:

Ceraflour 980 (Byk-Cera; Danzigweg 23; 7418 EN Deventer Netherlands), Ultraglide UV 701 (Krahn-Chemie GmbH; Grimm 10; 20457 Hamburg Germany), Shamrock ST-3 (Shamrock; Heesterveldweg 21; 3700 Tongeren Belgium)

### Mikronisierte Polytetrafluoroethylen/Polyethylen-Wachse:

Ceraflour 968 (Byk-Cera,- Danzigweg 23; 7418 EN Deventer Netherlands), Ceraflour 996 (Byk-Cera; Danzigweg 23; 7418 EN Deventer Netherlands)

### Amid-Wachse:

Ceraflour 994 (Byk-Cera; Danzigweg 23; 7418 EN Deventer Netherlands), Deurex MA 7020 (Deurex Micro-Technologies GmbH; Dr. Bergius Strasse 18/20; 06729 Tröglitz Germany)

### Carnaubawachse:

Ceraflour 4RC 1165 (Byk-Cera; Danzigweg 23; 7418 EN Deventer Netherlands), Everglide UV 636 25% (Krahn-Chemie GmbH; Grimm 10; 20457 Hamburg Germany)

### Montanwachse:

Deurex MM 8120 (Deurex Micro-Technologies GmbH; Dr. Bergius. Strasse 18/20; 06729 Tröglitz Germany), Deurex MM 8200 (Deurex Micro-Technologies GmbH; Dr. Bergius Strasse 18/20; 06729 Tröglitz Germany)

### Mikronisierte Ester-Wachse mit UV-reaktiven Gruppen:

Ceridust TP 5091 (Clariant GmbH; Am Unisyspark 1; 65843 Sulzbach Germany)

### Paraffin-Wachse:

Polyspers HP (Eastman Chemical Deutschland GmbH; Charlottenstrasse 61; 5114 9 Köln Germany)

### Polypropylen-Wachse:

Crayvallack WN-1135 (Lubrizol Coating Additives GmbH; Max Planck Strasse 6; 27721 Ritterhude Germany)

### Sprühmikronisierte Polyolefin-Wachse:

Printwax MXF 9510 D (Deurex Micro-Technologies GmbH; Dr. Bergius Strasse 18/20; 06729 Tröglitz Germany), Printwax MX. 9815 D (Deurex Micro-Technologies GmbH; Dr. Bergius Strasse 18/20; 06729 Tröglitz Germany)

Bevorzugt beträgt die Konzentration des Wachses 0 Gew.% bis 10 Gew.%, bevorzugter 0 Gew% bis 3,0 Gew% und besonders bevorzugt 0-2 Gew%, bezogen auf das Gewicht der Druckfarbe bzw. des Drucklacks.

Der Druckfarbe bzw. dem Lack kann vor dem Verdrucken ein Haftvermittler in einer Menge von 0,01 bis 20 Gew.%, bevorzugt 1 bis 10 Gew.-% bezogen auf das Gewicht der Farbe bzw. des Lacks zur Bedruckung zugesetzt werden. Dabei kann es sich um Isocyanat-Haftvermittler handeln, z.B. um aliphatische Polyisocyanate, wie Hexamethylendiisocyanat (HDI), Trimethylhexandiisocyanat (TMHDI), cycloaliphatische Polyisocyanate wie Isophorondiisocyanat (IPDI), hydriertes Xylylendiisocyanat (HXDI) oder Diisocyanatodicyclohexylmethan (HMDI), sowie aromatische Polyiisocyanate, wie Toluylendiisocyanat (TDI), Xylylendiisocyanat (XDI), Tetramethylxylylendiisocyanat (TMXDI) oder Diisocyanatodiphenylmethan (MDI). Kommerziell erhältliche Produkte sind z.B. Desmodur E41 oder Desmodur N 75 (Bayer). Auch Polyimide, wie Polyethylenimide, Polycarbodiimide, können eingesetzt werden. Weitere Haftvermittler sind Silan-Haftvermittler. wie Alkylsilane, Vinylsilane, Methacryloxysilane, Epoxysilane, Aminosilane, Harnstoffsilane, Chlorsilane und Isocyanatosilane sowie Aminosilane, wie beispielsweise *gamma-*Aminopropyltriethoxysilan, *gamma*-Aminopropyltrimethoxysilan, N-*beta*-(Aminoethyl)-*gamma-*aminopropyltrimethoxysilan, Bis(*gamma*-trimethoxysilylpropyl)-amin, N-Phenyl-*gamma-*aminopropyltrimethoxysilan und N-beta-(Aminoethyl)-*gamma*-aminopropylmethyldimethoxysilan, und Isocyanatosilane, wie *gamma*-Isocyanatopropyltriethoxysilan.

Bevorzugte Druckverfahren sind Siebdruck, Rotativer Siebdruck Digitaldruck, Flexodruck, Buchdruck, Offsetdruck und Tiefdruck. Besonders bevorzugt verwendet wird der Siebdruck.

Besonders geeignete thermoplastische Kunststoffe für die mit der Druckfarbe oder dem Drucklack zu beschichtenden Substrate und/oder zum Hinterfüllen des erfindungsgemäßen Schichtstoffs sind Polycarbonate oder Copolycarbonate auf Basis von Diphenolen, Poly- oder Copolyacrylate und Poly- oder Copolymethacrylate wie beispielhaft und vorzugsweise Polymethylmethacrylat (PMMA), Poly- oder Copolymere mit Styrol wie beispielhaft und vorzugsweise Polystyrol (PS) oder Polystyrolacrylnitril (SAN) oder Acrylnitril-Butadien-Polystyrol (ABS), thermoplastische Polyurethane, sowie Polyolefine, wie beispielhaft und vorzugsweise Polypropylentypen oder Polyolefine auf der Basis von cyclischen Olefinen (z.B. TOPAS^{®}, Hoechst), Poly- oder Copolykondensate der Terephthalsäure, wie beispielhaft und vorzugsweise Poly- oder Copolyethylenterephthalat (PET oder CoPET), glycol-modifiziertes PET (PETG), glycol-modifiziertes Poly- oder Copolycyclohexandimethylenterephthalat (PCTG) oder Poly- oder Copolybutylenterephthalat (PBT oder CoPBT), Poly- oder Copolykondensate der Naphthalindicarbonsäure, wie beispielhaft und vorzugsweise Polyethylenglykolnaphthalat (PEN), Poly- oder Copolykondensat(e) wenigstens einer Cycloalkyldicarbonsäure, wie beispielhaft und vorzugsweise Polycyclohexandimethanolcyclohexandicarbonsäure (PCCD), Polysulfone (PSU) oder Mischungen aus den vorangehend genannten.

Bevorzugte thermoplastische Kunststoffe sind Polycarbonate oder Copolycarbonate oder Blends enthaltend wenigstens ein Polycarbonat oder Copolycarbonat. Besonders bevorzugt sind Blends enthaltend wenigstens ein Polycarbonat oder Copolycarbonat und wenigstens ein Poly- oder Copolykondensat der Terephthalsäure, der Naphthalindicarbonsäure oder einer Cycloalkyldicarbonsäure, bevorzugt der Cyclohexandicarbonsäure Ganz besonders bevorzugt sind Polycarbonate oder Copolycarbonate, insbesondere mit mittleren Molekulargewichten M_{w} von 500 bis 100 000, bevorzugt von 10 000 bis 80 000, besonders bevorzugt von 15 000 bis 40 000 oder deren Blends mit wenigstens einem Poly- oder Copolykondensat der Terephthalsäure mit mittleren Molekulargewichten M_{w} von 10.000 bis 200.000, bevorzugt von 26.000 bis 120.000.

Gebräuchliche Substrate aus wenigstens einem thermoplastischen Kunststoff, welche mit der Druckfarbe oder dem Drucklack bedruckt werden, sind unter anderem Polycarbonat, vorbehandeltes Polyester, ABS, PMMA, Polycarbonat/Polyester-Blends, Polycarbonat/ABS-Blends, ohne sich darauf zu beschränken.

Als geeignete Substrate kommen beispielsweise ein oder mehrschichtige Substrate in Frage. Mehrschichtige Substrate können mehrere Kunststoffschichten und/oder eine Kunststoffschicht und eine Beschichtung aus anderen Materialien enthalten. Als geeignete mehrschichtige Substrate kommen beispielsweise coextrudierte Folien oder Laminate enthaltend einen oder mehrere der vorgenannten thermoplastischen Kunststoffe sowie beschichtete Folien enthaltend einen oder mehrere der vorgenannten thermoplastischen Kunststoffe in Frage.

Angeboten werden geeignete Folien beispielsweise von der Bayer MaterialScience AG (Bayfol®, Makrolon®, Makrofol®, Bayblend®)und Autotype (Autoflex Hiform™, Autoflex XtraForm™). Bevorzugt werden als Substrat Folien aus Polycarbonat oder Polycarbonat/Polyester Blends verwendet.

Bei den gebräuchlichen Spritzgutmaterialien, welche zum Hinterspritzen der Druckfarbe oder des Drucklacks, die auf die Folie appliziert wurden, verwendet werden können, handelt es sich im besonderen, aber nicht ausschließlich, um Polyester, Polycarbonate, Polycarbonat-Blends, Polystyrol, ABS, ABS-Blends, Polyamid, PVC und PMMA. Bevorzugtes Material zum Hinterspritzen ist Polycarbonat oder verschiedene Polycarbonat-Blends.

Die nachfolgenden Beispiele dienen der exemplarischen Erläuterung der Erfindung und sind nicht als Beschränkung aufzufassen.

### Ausführungsbeispiele:

### Herstellung von erfindungsgemäß als Bindemittel geeigneter Polycarbonate:

Beispielhafte Polycarbonate der Formel (I-h) wurden folgendermaßen hergestellt:

### Polycarbonat 1

205,7 g (0,90 Mol) Bisphenol A (2,2-Bis-(4-hydroxyphenyl)-propan), 30,7 g (0,10 Mol) 1,1-Bis-(4-hydroxyphenyl)-3,3,5-trimethylcyclohexan, 336,6 g (6 Mol) KOH und 2700 g Wasser werden in einer Inertgas-Atmosphäre unter Rühren gelöst. Dann fügt man eine Lösung von 1,88 g Phenol in 2500 ml Methylenchlorid zu. In die gut gerührte Lösung wurden bei pH 13 bis 14 und 21 bis 25°C 198 g (2 Mol) Phosgen eingeleitet. Danach wird 1 ml Ethylpiperidin zugegeben und noch 45 Min. gerührt. Die bisphenolatfreie wässrige Phase wird abgetrennt, die organische Phase nach Ansäuern mit Phosphorsäure mit Wasser neutral gewaschen und vom Lösungsmittel befreit. Das Polycarbonat zeigte eine relative Lösungsviskosität von 1,255.

Die Glasübergangstemperatur des Polymers wurde zu 157°C bestimmt (DSC).

### Polycarbonat 2

Wie für Polycarbonat 1 wurde eine Mischung aus 181,4 g (0,79 Mol) Bisphenol A und 63,7 g (0,21 Mol) 1,1-Bis-(4-hydroxyphenyl)-3,3,5-trimethylcyclohexan zum Polycarbonat umgesetzt.

Das Polycarbonat zeigte eine relative Lösungsviskosität von 1,263.

Die Glasübergangstemperatur des Polymers wurde zu 167°C bestimmt (DSC).

### Polycarbonat 3

Wie für Polycarbonat 1 wurde eine Mischung aus 149,0 g (0,65 Mol) Bisphenol A und 107,9 g (0,35 Mol) 1,1-Bis-(4-hydroxyphenyl)-3,3,5-trimethylcyclohexan zum Polycarbonat umgesetzt.

Das Polycarbonat zeigte eine relative Lösungsviskosität von 1,263.

Die Glasübergangstemperatur des Polymers wurde zu 183°C bestimmt (DSC).

### Polycarbonat 4

Wie für Polycarbonat 1 wurde eine Mischung aus 91,6 g (0,40 Mol) Bisphenol A und 185,9 g (0,60 Mol) 1,1-Bis-(4-hydroxyphenyl)-3,3,5-trimethylcyclohexan zum Polycarbonat umgesetzt.

Das Polycarbonat zeigte eine relative Lösungsviskosität von 1,251.

Die Glasübergangstemperatur des Polymers wurde zu 204°C bestimmt (DSC).

### Polycarbonat 5

Wie für Polycarbonat 1 wurde eine Mischung aus 44,2 g (0,19 Mol) Bisphenol A und 250,4 g (0,81 Mol) 1,1-Bis-(4-hydroxyphenyl)-3,3,5-trimethylcyclohexan zum Polycarbonat umgesetzt.

Das Polycarbonat zeigte eine relative Lösungsviskosität von 1,248.

Die Glasübergangstemperatur des Polymers wurde zu 216°C bestimmt (DSC).

Die Glasübergangstemperaturen wurden mittels DSC (Differential Scanning Calorimetry) nach ISO 11357 bestimmt. Zur Bestimmung der Glasübergangstemperaturen wurden die Proben vorher im Vakuumschrank 24 Stunden getrocknet

Herstellung der erfindungsgemäß eingesetzten Siebdruckfarben:

Zur Veranschaulichung der Erfindung wurden Siebdruckfarben wie folgt hergestellt:

Dazu wurden zunächst 20 Gew.-% des Bindemittels der Fa. Bayer Material Science (Polycarbonat 4, s. oben) in 80 Gew.-% UV-härtbarem Monomer 4-(1-Oxo-2-propenyl)morpholin gelöst. Dem in UV-härtbarem Monomer 4-(1-Oxo-2-propenyl)morpholin gelöstem Bindemittel wurden weitere monofunktionelle Acrylate, ein Diacrylat, Photoinitiatoren, Verlaufmittel, Verdicker und Pigment zugefügt, mit einem Dissolver vordispergiert und mit Hilfe eines Dreiwalzenstuhls oder einer Perlmühle eine Farbe mit einer Kornfeinheit von < 10µm hergestellt.

Die Erfindung wird durch die in der Tab. 1 und 2 aufgeführten Beispiele 1 und 2 beschrieben, ohne auf diese beschränkt zu sein.

### Beispiel 1 (erfindungsgemäß): Blaue Farbe für den Siebdruck

**Tab. 1**

| **Rohstoff** | **Gewichtsprozent** |
|---|---|
| Polycarbonat 4 (20Gew.%) in 4-(1-Oxo-2-propenyl)morpholin (80Gew.%) | 72,00 |
| 1-Ethenylazepan-2-on | 4,66 |
| 2-Phenoxyethylacrylat (Sartomer SR339EU) | 6,44 |
| Tricyclodecandimethanol Diacrylat (Sartomer SR833S) | 5,00 |
| Polysiloxan (Verlaufmittel) | 1,00 |
| Phenyl bis (2,4,6-trimethylbenzoyl)-phosphinoxid(Photoinitiator) | 0,90 |
| 2-Hyroxy-2-methyl-1-phenyl-1-propanon (Photoinitiator) | 5,00 |
| modifizierte Harnstofflösung (Verdicker) | 1,00 |
| Sunfast blue 15:3 249-1532 (Pigment) . | 4,00 |

### Beispiel 2 (erfindungsgemäß): Weiße Farbe für den Siebdruck

**Tab. 2**

| **Rohstoff** | **Gewichtsprozent** |
|---|---|
| Polycarbonat 4 (20Gew.%) in 4-(1-Oxo-2-propenyl)morpholin (80Gew.%) | 27,90 |
| 1-Ethenylazepan-2-on | 7,60 |
| 2-Phenoxyethylacrylat (Sartomer SR339EU) | 10,50 |
| 4-(1-Oxo-2-propenyl)morpholin | 1,10 |
| Tricyclodecandimethanol Diacrylat (Sartomer SR833S) | 5,00 |
| Polysiloxan (Verlaufmittel) | 1,00 |
| Phenyl bis (2,4,6-trimethylbenzoyl)-phosphinoxid (Photoinitiator) | 0,90 |
| 2-Hydroxy-2-methyl-1-phenyl-1-propanon (Photoinitiator) | 5,00 |
| modifizierte Harnstofflösung (Verdicker) | 1,00 |
| Tiona 595 (Pigment) | 40,00 |

Zur Herstellung der erfindungsgemäßen Schichtstoffe wurden die Siebdruckfarben aus den Beispielen 1 und 2 mit einer Viskosität von ca. 4.000 mPa*s (Kegel-Platte-System bei einer Scherrate von 100/s) jeweils durch ein Siebdruckgewebe 150-31 auf eine Polycarbonatfolie gedruckt **(Makrofol^{®}** DE-4; 375µm; Bayer MaterialScience AG) und bei einer Geschwindigkeit von 15m/min mit Hilfe von 2 x 120 W/cm starken Quecksilberdampflampen gehärtet.

### Beispiel 3 (erfindungsgemäß): Blaue Farbe für den Siebdruck

Bei der Herstellung einer weiteren Siebdruckfarbe wurden 30 Gew.-% des Bindemittels der Fa. Bayer Material Science (Polycarbonat 5, s. oben) in 70 Gew.% UV-härtbarem Monomer 4-(1-Oxo-2-propenyl)morpholin gelöst.

Dem in UV-härtbarem Monomer 4-(1-Oxo-2-propenyl)morpholin gelöstem Bindemittel wurde ein Diacrylat, Photoinitiatoren, Verlaufmittel, Verdicker und Pigment zugefügt, mit einem Dissolver vordispergiert und mit Hilfe eines Dreiwalzenstuhls oder einer Perlmühle eine Farbe mit einer Kornfeinheit von < 10µm hergestellt.

Die Erfindung wird durch das in Tab. 3 aufgeführte Beispiel beschrieben, ohne auf dieses beschränkt zu sein.

**Tab. 3**

| **Rohstoff** | **Gewichtsprozent** |
|---|---|
| Polycarbonat 5 (30Gew.%) in 4-(1-Oxo-2-propenyl)morpholin (70Gew.%) | 52,50 |
| 4-(1-Oxo-2-propenyl)morpholin | 25,60 |
| Tricyclodecandimethanol Diacrylat (Sartomer SR833S) | 10,00 |
| Polysiloxan (Verlaufmittel) | 1,00 |
| Phenyl bis (2,4,6-trimethylbenzoyl)-phosphinoxid (Photoinitiator) | 0,90 |
| 2-Hydroxy-2-methyl-1-phenyl-1-propanon (Photoinitiator) | 5,00 |
| modifizierte Harnstofflösung (Verdicker) | 1,00 |
| Sunfast blue 15:3 249-1532 (Pigment) | 4,00 |

Die Siebdruckfarbe mit einer Viskosität von ca. 4.000 mPa*s (Kegel-Platte-System bei einer Scherrate von 100/s) wurde durch ein Siebdruckgewebe 150-31 auf eine Polycarbonatfolie gedruckt (Makrofolol^{®} DE-4; 375µm, Bayer MaterialScience AG) und bei einer Geschwindigkeit von 15m/min mit Hilfe von 2 x 120 W/cm starken Quecksilberdampflampen gehärtet.

Zu Vergleichzwecken wurden die folgenden folgenden Beispiele 4 bis 7 durchgeführt:

### Vergleichsbeispiel 4: UV-Farbe für den graphischen Siebdruck

Es wurde eine kommerziell erhältliche Siebdruckfarbe mit der Zusammensetzung gemäß Tab. 4, die ein Polyacrylat als Bindemittel enthielt, wie für die Beispiele 1 und 2 beschrieben auf eine Polycarbonatfolie (Makrofol^{®} DE-4; 375µm, Bayer MaterialScience AG) gedruckt und gehärtet.

**Tab. 4 UV-Farbe für den graphischen Siebdruck**

| **Rohstoff** | **Gewichtsprozent** |
|---|---|
| MMA-Copolymer | 17,50 |
| 1-Ethenylazepan-2-on | 9.00 |
| Isobornylacrylat | 35,00 |
| 2-Phenoxyethylacrylat (Sartomer SR339EU) | 6,00 |
| Polysiloxan (Verlaufmittel) | 1,00 |
| 2-Hydroxy-2-methyl-1-phenyl-1-propanon (Photoinitiator) | 3,50 |
| 2-Benzyl-2-(dimethylamino)-1-[4-(4-morpholinyl)-1-butanon (Photoinitiator) | 2,00 |
| Isopropylthioxanthon (Photoinitiator) | 0,70 |
| Diphenyl(2,4,6-trimethylbenzoyl)-phosphinoxid (Photoinitiator) | 1,30 |
| Sunfast blue 15:3 249-1532 (Pigment) | 4,00 |
| Bariumsulfat (Sachtleben Blanc Fixe micro) | 20,00 |

### Vergleichsbeispiel 5: UV-Farbe für den graphischen Siebdruck

Es wurde eine kommerziell erhältliche Siebdruckfarbe mit der Zusammensetzung gemäß Tab. 5, die ein anderes Polyacrylat als in Vergleichsbeispiel 4 als Bindemittel enthielt, wie für die Beispiele 1 und 2 beschrieben auf eine Polycarbonatfolie (Makrofol^{®} DE-4; 375µm, Bayer MaterialScience AG) gedruckt und gehärtet.

**Tab. 5: UV-Farbe für den graphischen Siebdruck**

| **Rohstoff** | **Gewichtsprozent** |
|---|---|
| MMA-Copolymer | 24,00 |
| 1,6-Hexandioldiacrylat (Sartomer SR238) | 23,00 |
| Isobornylacrylat | 12,00 |
| 2-Phenoxyethylacrylat (Sartomer SR339EU) | 15,00 |
| Polysiloxan (Verlaufmittel) | 1,00 |
| Phenyl bis (2,4,6-trimethylbenzoyl)-phosphinoxid (Photoinitiator) | 0,90 |
| 1-Hydroxycyclohexylphenylketon (Photoinitiator) | 7,00 |
| Sunfast blue 15:3 249-1532 (Pigment) | 4,00 |
| Bariumsulfat (Blanc Fixe micro) | 13,10 |

### Vergleichsbeispiel 6: UV-Farbe für den graphischen Siebdruck

Es wurde eine kommerziell erhältliche Siebdruckfarbe mit der Zusammensetzung gemäß Tab. 6, die ein Polyurethanacrylat als Bindemittel enthielt, wie für die Beispiele 1 und 2 beschrieben auf eine Polycarbonatfolie (Makrofol^{®} DE-4; 375µm, Bayer MaterialScience AG) gedruckt und gehärtet.

**Tab. 6: UV-Farbe für den Siebdruck**

| **Rohstoff** | **Gewichtsprozent** |
|---|---|
| Polyurethanacrylat | 46,00 |
| 1-Ethenylazepan-2-on | 9,00 |
| Isobornylacrylat | 22,00 |
| Polysiloxan (Verlaufmittel) | 1,00 |
| Isopropylthioxanthon (Photoinitiator) | 1,00 |
| 2-Methyl-1-[4-(methylthio)phenyl]-2-(morpholinyl)-1-propanon (Photoinitiator) | 2,00 |
| Sunfast blue 15:3 249-1532 | 4,00 |
| Bariumsulfat (Blanc Fixe micro) | 15,00 |

### Vergleichsbeispiel 7: UV-Farbe für den In-Mould-Prozeß

Es wurde eine kommerziell erhältliche Siebdruckfarbe der Fa. Coates (Decomold^{™}), die als Bindemittel ein Copolymer mit aliphatischem Polycarbonatrückgrat und oligomeren Urethanacrylat-Seitenketten enthielt, wie für die Beispiele 1 und 2 beschrieben auf eine Polycarbonatfolie (Makrofol^{®} DE-4; 375µm, Bayer MaterialScience AG) gedruckt und gehärtet.

### Beispiel 8: Ergebnisse der Verformungsversuche:

Die gemäß den Beispielen 1 bis 7 hergestellten beschichteten Folien (Schichtstoffe) wurden wie folgt beschrieben auf ihre Verformbarkeit getestet.

Die Verformungsversuche wurden auf einer SAMK 360 Hochdruckverformungsmaschine (HPF-Verformungsmachine) Bj. 2000 der Fa. Niebling durchgeführt. Für die Bewertung der Verformungseigenschaften sind die Versuche mit einem Heizungs-Lüftungs-Blenden Werkzeug durchgeführt worden. Die Abmaße des Bauteils betrugen ca. 190 x120 mm mit verschiedenen Durchbrüchen, um hier die Verstreckung zu bewerten.

Die Werkzeugtemperatur lag bei 100°C. Vor der Verformung wurden die Folien in einem Heizbereich vorgewärmt. Die Heizzeit lag bei allen Versuchen bei 16 sek, was eine Folientemperatur von ca. 150-160°C ergab. Für die Bewertung wurden jeweils 5 Folien aus den jeweiligen Beispielen hintereinander verformt.

Die Bewertung wurde visuell durchgeführt und die Ergebnisse in Tab. 7 zusammengestellt.

**Tab. 7**

| Beispiel | HPF-Verformung | Verstreckung | Bewertung (Verformung/Verstreckung) |
|---|---|---|---|
| Nr. 1 | Ok | ok | +/+ |
| Nr. 2 | Ok | ok | +/- |
| Nr. 3 | Ok | ok | +/+ |
| Nr. 4 | Ok | ok | +/+ |
| Nr. 5 | Ok | Risse | +/- |
| Nr. 6 | Ok | starke Risse | +/- |
| Nr. 7 | Klebt bei 80°C | ok | -/+ |

Die Ergebnisse zeigten, dass außer den erfindungsgemäßen Schichtstoffen nur der Schichtstoff aus Vergleichsbeispiel 4 verformt und verstreckt werden konnte, ohne dabei den gesamten Schichtstoff oder die Farbschicht zu beschädigen.

### Beispiel 9: Ergebnisse der Hinterspritz-Versuche:

Die gemäß den Beispielen 1 bis 7 hergestellten, beschichteten und gemäß Beispiel 8 verformten Folien (Schichtstoffe) wurden wie folgt beschrieben auf ihre Hinterspritzbarkeit getestet. Für die Bewertung im Folienhinterspritzprozess (FIM = Film Insert Molding) konnten die gleichen Folien, wie aus dem Verformungsversuch verwendet werden.

Die Versuche wurden auf einer Spritzgießmaschine der Firma Arburg durchgeführt Die Arburg Alhounder 570 C hat eine Schließkraft von max. 200 to und ist Bj. 2003. Die verschiedenen Folien wurden mit PC/ABS bei 260°C hinterspritzt. Die Füllzeit lag bei 2 sek und der Spritzdruck wurde mit 1000 bar gemessen. Die Werkzeugtemperatur wurde standardmäßig auf 60°C gestellt. Das Werkzeug verfügt über eine Heißkanaldüse die über einen Kaltverteiler den Kunststoff über Hilfszapfen ins Formnest leitet. Hierbei entstehen hohe Temperaturen und Scherungen, die bei zu hoher Beanspruchung teilweise die aufgedruckte Farbe auswaschen können.

Anschließend wurde in einem manuellen Abzugsversuch die Haftung des hinterspritzten Kunststoffes zur Farbe bewertet.

Die Bewertung wurde visuell durchgeführt und die Ergebnisse in Tab. 8 zusammengestellt.

**Tab. 8**

| Beispiel | Auswaschung | Haftung | Bewertung (Auswaschung/Haftung) |
|---|---|---|---|
| Nr. 1 | keine | gut | +/+ |
| Nr. 2 | keine | gut | +/+ |
| Nr. 3 | keine | gut | +/+ |
| Nr.4 | starke Auswaschung | keine | -/- |
| Nr. 5 | Keine | gering | +/- |
| Nr. 6 | Keine | keine | +/- |
| Nr. 7 | keine | keine | +/- |

Die Ergebnisse zeigten, dass nur die erfindungsgemäßen Schichtstoffe sowohl ohne Auswaschung der Farbschicht als auch mit guter Haftung zwischen Schichtstoff und hinterspritztem Materials mit einem Thermoplasten hinterspritzt werden konnten.

### Beispiel 10: Ergebnisse der Klimaprüfung:

Um eine weitergehende Bewertung hinsichtlich der Haftung zwischen bedruckter Folie (Schichtstoff) und dem Hinterspritzmaterial zu erhalten, wurden die Formteile aus Beispiel 9 einer Klimalagerung ausgesetzt. Hier wurden die Prüfungen in einem Klimaschrank der Fa. Weiss, Bj.1989 unter folgenden Bedingungen durchgeführt:
Temperatur:80°C
Luftfeuchtigkeit: 85%
Lagerzeit: 1 oo Std.

Anschließend wurden die Folien visuell bewertet und ebenfalls ein manueller Abzugsversuch durchgeführt. Die Ergebnisse sind in Tab. 9 aufgeführt.

**Tab. 9**

| Beispiel | Erscheinungsbild | Haftung | Bewertung (Erscheinungsbild/Haftung) |
|---|---|---|---|
| Nr. 1 | ok | gut | +/+ |
| Nr. 2 | ok | gut | +/+ |
| Nr. 3 | ok | gut | +/+ |
| Nur.4* | nicht geprüft | nicht geprüft | keine |
| Nr. 5 | starke Blasen | keine | -/- |
| Nr. 6 | starke Blasen | keine | -/- |
| Nr. 7 | Blasen | keine | -/- |

Die Ergebnisse zeigten, dass nur die erfindungsgemäßen Schichtstoffe nach der Klimalagerung noch ein gutes Erscheinungsbild und eine gute Haftung aufwiesen. Die Vergleichsbeispiele wiesen Blasenbildung auf und zeigten keine Haftung mehr.

*Die Schichtstoffe gemäß Vergelichsbeispiel 4 wurden in der Klimalagerung nicht mehr gestestet, da bereits die Ergebnisse gemäß Beispiel 9 zu schlecht für eine nachgeschaltete Langzeitklimalagerung waren.

### Gesamtbewertung:

Betrachtete man die Ergebnisse der Beispiele 8 - 10, d.h. für die gesamte Prozesskette des Verformens und Hinterspritzens der bedruckten Folien (Schichtstoffe), so zeigte sich folgendes Gesamtbild für die Bespiele:

**Tab. 10**

| Beispiel | Verformung | Hinterspritzen | Klimaprüfung | Bewertung |
|---|---|---|---|---|
| Nr. 1 | ok | ok | ok | + |
| Nr.2 | Leichte Risse | ok | ok | + |
| Nr. 3 | ok | ok | ok | + |
| Nr. 4 | ok | Auswaschung | Nicht geprüft | - |
| Nr. 5 | Risse | Geringe Haftung | Blasen | - |
| Nr. 6 | Risse | Keine Haftung | Blasen | - |
| Nr. 7 | Klebt | Keine Haftung | Blasen | - |

Für die erfindungsgemäßen Schichtstoffe aus den Beispielen 1 bis 3 wurde eine gute Verformbarkeit, Verstreckbarkeit bei dieser Verformung und Hinterspritzbarkeit beobachtet. Die Haftung des Hinterspritzmaterials mit der bedruckten Folie (dem erfindungsgemäßen Schichtstoff) war sowohl unmittelbar nach dem Hinterspritzen als auch nach Lagerung in der Klimakammer gut und es konnte zudem keinerlei Auswaschung der Farbe beobachtet werden. Die Vergleichsbeispiele 4 bis 7 zeigten teilweise bereits bei der Verformung deutliche Schwächen hinsichtlich signifikanter Rissbildung in der Farbschicht oder Ankleben des gesamten Schichtstoffs am Verformungswerkzeug. Beim Hinterspritzen und der Klimalagerung zeigten alle Vergleichsbeispiele entweder starke Auswaschung der Farbe aus der Farbschicht oder keine bis unzureichende Haftung zwischen beschichteter Folie und Hinterspritzmaterial.

### Beispiel 11:

In Tab. 11 wurden weitere Beispiele für geeignete Farben mit blauem Farbton für verschiedene Druckverfahren aufgeführt, ohne darauf beschränkt zu sein.

**Tab. 11: Beispiele blauer Farben für verschiedene Druckverfahren**

| **Rohstoff** | **Sieb-Druck** | **Rotations-siebdruck** | **Flexo-druck** | **Digital-druck** |
|---|---|---|---|---|
| Polycarbonat 4 (30%) in 4-(1-Oxo-2-propenyl)morpholin (70%) | | 31,00 | 15,40 | 5,00 |
| Polycarbonat 5 (35%) in 4-(1-Oxo-2-propenyl)morpholin (65%) | 41,00 | | | |
| Aliphatisches Diacrylat (80%) in Dipropylenglycoldiacrylat (20%) | | | | 5,00 |
| 4-(1-Oxo-2-propenyl)morpholin | | 4,00 | 8,60 | 23,00 |
| 1-Ethenylazepan-2-on | 18,00 | 16,00 | 15,50 | 19,00 |
| 2-Phenoxyethylacrylat (SR339EU) | 24,10 | 22,00 | 21,00 | 26,00 |
| 1,6-Hexandioldiacrylat | 5,00 | 5,00 | 5,00 | 5,00 |
| Polysiloxan | 1,00 | | | 0,10 |
| Acrylierter Entschäumer silikonfrei | | 2,50 | 2,50 | |
| Solsperse 5000 | | 0,10 | 0,40 | 0,05 |
| Solsperse 39000 | | 0,40 | 1,60 | 0,20 |
| modifizierte Harnstofflösung | 1,00 | | | |
| 2-Hydroxy-2-methyl-1-phenyl-1-propanon | 5,00 | 7,50 | 7,50 | |
| 1-Hydroxycyclohexylphenylketon | | | | 7,50 |
| Diphenyl(2,4,6-trimethylbenzoyl)-phosphinoxid | | 7,50 | 7,50 | 7,50 |
| Phenyl bis (2,4,6-trimethylbenzoyl)-phosphinoxid | 0,90 | | | |
| Sunfast blue 15:3 249-1532 | 4,00 | 4,00 | | |
| Hostaperm Blau B2G | | | 15,00 | 1,65 |

## Patentansprüche

1. Schichtstoff umfassend
a) ein Substrat aus wenigstens einem thermoplastischen Kunststoff, vorzugsweise eine Folie aus wenigstens einem thermoplastischem Kunststoff,
b) eine ein- oder mehrschichtige Farbschicht und/oder Lackschicht aus wenigstens einer Druckfarbe oder eines Drucklackes, enthaltend
- als Bindemittel mindestens ein nicht-strahlenhärtbares aromatisches Polycarbonat auf der Basis eines geminal disubstituierten Dihydroxydiphenylcycloalkans, und
- als Lösemittel mindestens ein strahlenhärtbares Monomer, das ausgewählt ist aus der Gruppe Acrylate, Methacrylate, Vinylether und stickstoffhaltige Verbindungen mit einer ethylenischen Doppelbindung,
**dadurch gekennzeichnet, dass** das Bindemittel in dem Lösemittel gelöst ist und das Lösemittel nach der Härtung in der Druckfarbe oder dem Drucklack in chemisch vernetzter Form eingebunden ist.

2. Schichtstoff nach Anspruch 1, **dadurch gekennzeichnet, dass** die Glasübergangstemperatur des als Bindemittel eingesetzten Polycarbonats in der Farbschicht bzw. der Lackschicht T_{g(Bindemitel)} höher ist als die des Substrats T_{g(Substrat),} insbesondere der thermoplastischen Kunststofffolie.

3. Schichtstoff nach Anspruch 1 oder 2, **dadurch gekennzeichnet, dass** es sich bei dem thermoplastischen Kunststoff des Substrats um ein oder mehrere Polycarbonat(e) oder Copolycarbonat(e) auf Basis von Diphenolen, Poly- oder Copolyacrylat(e) und Poly- oder Copolymethacrylat(e), Poly- oder Copolymer(e) mit Styrol, Poly- oder Copolykondensat(e) der Terephthalsäure, der Naphthalindicarbonsäure oder einer Cycloalkyldicarbonsäure, Polyurethan(e), Polyolefin(e) oder Mischungen aus diesen handelt.

4. Schichtstoff nach einem der Ansprüche 1 bis 3, **dadurch gekennzeichnet dass**, die Gesamtdicke des Substrats und der Farbschicht bzw. der Lackschicht 0,05 bis 4 mm, bevorzugt 0,1 mm bis 2 mm, besonders bevorzugt 0,2 bis 2 mm umfasst.

5. Schichtstoff nach einem der Ansprüche 1 bis 4, **dadurch gekennzeichnet, dass** das Substrat aus einer oder mehreren Kunststoffschichten besteht und/oder die Farbschicht aus einer oder mehreren Schichten besteht.

6. Schichtstoff nach einem der Ansprüche 1 bis 5, **dadurch gekennzeichnet, dass** das Polycarbonat im Bindemittel der Druckfarbe oder des Drucklacks ein Molekulargewicht M_{w}-(Gewichtsmittel) von mindestens 10000 aufweist und/oder bifunktionelle Carbonatstruktureinheiten der Formel (I) enthält, 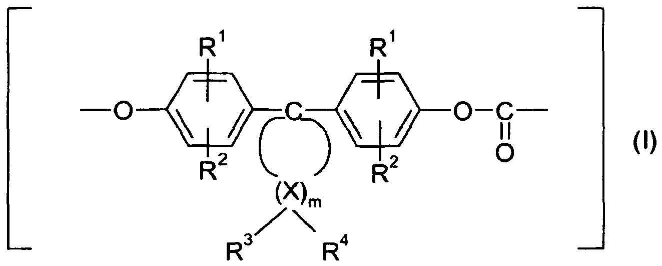 worin
R¹ und R² Wasserstoff, Halogen, C₁-C₈-Alkyl, C₅-C₆-Cycloalkyl, C₆-C₁₀-Aralkyl,
m eine ganze Zahl von 4 bis 7,
R³ und R⁴ für jedes X individuell wählbar, unabhängig voneinander Wasserstoff oder C₁-C₆-Alkyl und
X Kohlenstoff bedeuten,
mit der Maßgabe, dass an mindestens einem Atom X, R³ und R⁴ gleichzeitig Alkyl bedeuten.

7. Schichtstoff nach Anspruch 6, **dadurch gekennzeichnet, dass** das Polycarbonat mindestens 30 Mol.% der bifunktionellen Carbonatstruktureinheit der Formel (I), bezogen auf die Stoffmenge aller enthaltenen bifunktionellen Carbonatstruktureinheiten, enthält.

8. Schichtstoff nach einem der Ansprüche 1 bis 7, **dadurch gekennzeichnet, dass** die Erweichungstemperatur der strahlengehärteten Druckfarbe oder Drucklacke < 144°C, vorzugsweise < 120°C, weiter vorzugsweise < 100°C ist.

9. Schichtstoff nach einem der Ansprüche 1 bis 8, **dadurch gekennzeichnet, dass** der Schichtstoff verformt ist.

10. Verfahren zur Herstellung eines Schichtstoffes gemäß den Ansprüchen 1 bis 9, **dadurch gekennzeichnet, dass** ein Substrat, insbesondere eine Folie aus einem thermoplastischen Kunststoff, mit einer Farbschicht und/oder einer Lackschicht durch Drucken, insbesondere Siebdrucken, beschichtet und anschließend mittels Strahlenhärtung gehärtet wird.

11. Verfahren gemäß Anspruch 10, **dadurch gekennzeichnet, dass** das Substrat vor dem Beschichten mit der Farbschicht und/oder Lackschicht oder der Schichtstoff nach dem Beschichten des Substrats mit der Farbschicht und/oder Lackschicht verformt wird.

12. Hinterfülltes Formteil, **dadurch gekennzeichnet, dass** ein Schichtstoff nach einem der Ansprüche 1 bis 9 auf der mit der Druckfarbe oder dem Drucklack bedruckten Seite ein- oder mehrfach mit wenigstens einem thermoplastischen Kunststoff hinterfüllt ist, wobei der zum Hinterfüllen verwendete thermoplastische Kunststoff eine Temperatur von 200°C oder mehr aufweist.

13. Verfahren zur Herstellung eines hinterfüllten Formteils nach Anspruch 12, **dadurch gekennzeichnet, dass** ein gemäß dem Verfahren nach Anspruch 10 oder 11 hergestellter Schichtstoff auf der mit der Druckfarbe oder dem Drucklack bedruckten Seite ein- oder mehrfach bei einer Temperatur von 200°C oder höher mit wenigstens einem thermoplastischen Kunststoff hinterfüllt wird.

14. Verfahren nach Anspruch 13, **dadurch gekennzeichnet, dass** das Hinterfüllen mittels Hinterspritzen, Hinterpressen oder Hinterschäumen, bevorzugt mittels Hinterspritzen erfolgt.

15. Verfahren nach Anspruch 13 oder 14, **dadurch gekennzeichnet, dass** gemäß dem Verfahren nach Anspruch 10 oder 11 hergestellter Schichtstoff auf der mit der Druckfarbe oder dem Drucklack bedruckten Seite mit einer Polyurethanschicht durch Drucken, insbesondere Siebdrucken, beschichtet und anschließend mit wenigstens einem thermoplastischen Kunststoff hinterfüllt wird.

## Claims

1. Laminate comprising
a) a substrate comprising at least one thermoplastic, preferably a film of at least one thermoplastic,
b) a single-layer or multi-layer ink layer and/or varnish layer comprising at least one printing ink or print varnish, comprising
- as binder at least one non-radiation-curable aromatic polycarbonate based on a geminally disubstituted dihydroxydiphenylcycloalkane, and
- as solvent at least one radiation-curable monomer selected from the group consisting of acrylates, methacrylates, vinyl ethers and nitrogen-containing compounds having an ethylenic double bond,
**characterized in that** the binder is in solution in the solvent and the solvent after curing is incorporated in the printing ink or print varnish in chemically crosslinked form.

2. Laminate according to Claim 1, **characterized in that** the glass transition temperature of the polycarbonate used as binder in the ink layer and/or varnish layer, T_{g(binder)}, is higher than that of the substrate, T_{g(substrate)}, more particularly of the thermoplastic film.

3. Laminate according to Claim 1 or 2, **characterized in that** the thermoplastic of the substrate comprises one or more polycarbonates or copolycarbonates based on diphenols, or polyacrylates or copolyacrylates and polymethacrylates or copolymethacrylates, polymers or copolymers of styrene, polycondensates or copolycondensates of terephthalic acid, of naphthalenedicarboxylic acid or of a cycloalkyl-dicarboxylic acid, or polyurethanes, polyolefins or mixtures of these.

4. Laminate according to any of Claims 1 to 3, **characterized in that** the total thickness of the substrate and of the ink layer and/or varnish layer encompasses 0.05 to 4 mm, preferably 0.1 mm to 2 mm, more preferably 0.2 to 2 mm.

5. Laminate according to any of Claims 1 to 4, **characterized in that** the substrate consists of one or more plastics layers and/or the ink layer consists of one or more layers.

6. Laminate according to any of Claims 1 to 5, **characterized in that** the polycarbonate in the binder of the printing ink or print varnish has a molecular weight M_{w} (weight average) of at least 10 000 and/or comprises difunctional carbonate structural units of the formula (I) 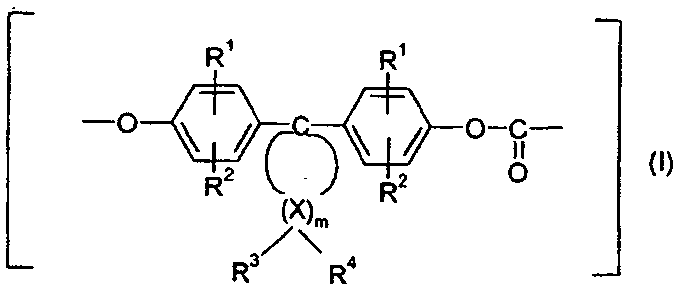 in which
R¹ and R² are hydrogen, halogen, C₁-C₈ alkyl, C₅-C₆ cycloalkyl or C₆-C₁₀ aralkyl,
m is an integer from 4 to 7,
R³ and R⁴, selectable individually for each X, are independently of one another hydrogen or C₁-C₆ alkyl, and
X is carbon,
with the proviso that R³ and R⁴ are alkyl simultaneously on at least one atom X.

7. Laminate according to Claim 6, **characterized in that** the polycarbonate comprises at least 30 mol% of the difunctional carbonate structural unit of the formula (I), based on the amount-of-substance of all of the bifunctional carbonate structural units present.

8. Laminate according to any of Claims 1 to 7, **characterized in that** the softening temperature of the radiation-cured printing ink or print varnish is < 144°C, preferably < 120°C, more preferably < 100°C.

9. Laminate according to any of Claims 1 to 8, **characterized in that** the laminate has been shaped.

10. Process for producing a laminate according to Claims 1 to 9, **characterized in that** a substrate, more particularly a film of a thermoplastic, is coated with an ink layer and/or varnish layer by printing, more particularly screenprinting, and is subsequently cured by means of radiation curing.

11. Process according to Claim 10, **characterized in that**, prior to coating with the ink layer and/or varnish layer, the substrate, or, after coating of the substrate with the ink layer and/or varnish layer, the laminate is shaped.

12. Backfilled moulding **characterized in that** a laminate according to any of Claims 1 to 9 is backfilled, on the side printed with the printing ink or print varnish, singly or multiply with at least one thermoplastic, the thermoplastic used for backfilling having a temperature of 200°C or more.

13. Process for producing a backfilled moulding according to Claim 12, **characterized in that** a laminate produced by the process according to Claim 10 or 11 is backfilled, on the side printed with the printing ink or print varnish, singly or multiply, at a temperature of 200°C or more, with at least one thermoplastic.

14. Process according to Claim 13, **characterized in that** the backfilling is accomplished by means of injection back moulding, compression back moulding or foam backing, preferably by means of injection back moulding.

15. Process according to Claim 13 or 14, **characterized in that** laminate produced by the process according to Claim 10 or 11 is coated, on the side printed with the printing ink or print varnish, with a polyurethane layer by printing, more particularly screenprinting, and is subsequently backfilled with at least one thermoplastic.

## Revendications

1. Matériau stratifié, comprenant
a) un substrat en au moins un matériau synthétique thermoplastique, de préférence une feuille en au moins un matériau synthétique thermoplastique,
b) une couche colorée et/ou de laque à une ou plusieurs couches, constituée par au moins une encre d'imprimerie ou une laque d'impression, contenant
- comme liant au moins un polycarbonate aromatique non durcissable par des rayons à base d'un dihydroxydiphénylcycloalcane disubstitué en position géminée, et
- comme solvant au moins un monomère durcissable par des rayons, qui est choisi dans le groupe des acrylates, des méthacrylates, des vinyléthers et des composés azotés présentant une double liaison éthylénique,
**caractérisé en ce que** le liant est dissous dans le solvant et le solvant est incorporé après le durcissement dans l'encre d'imprimerie ou la laque d'imprimerie sous forme chimiquement réticulée.

2. Matériau stratifié selon la revendication 1, **caractérisé en ce que** la température de transition vitreuse du polycarbonate utilisé comme liant dans la couche colorée ou, selon le cas, de laque T_{g(liant)} est supérieure à celle du substrat T_{g(Substrat)}, en particulier de la feuille en matériau synthétique thermoplastique.

3. Matériau stratifié selon la revendication 1 ou 2, **caractérisé en ce qu'**il s'agit, pour le matériau synthétique thermoplastique du substrat, d'un ou de plusieurs polycarbonate(s) ou copolycarbonate(s) à base de diphénols, polyacrylate(s) ou copolyacrylate(s) et polyméthacrylate(s) ou copolyméthacrylate(s), polymère(s) ou copolymère(s) avec du styrène, produit(s) de polycondensation ou de copolycondensation de l'acide téréphtalique, de l'acide naphtalènedicarboxylique ou d'un acide cycloalkyldicarboxylique, polyuréthane(s), polyoléfine(s) ou de mélanges de ceux-ci.

4. Matériau stratifié selon l'une quelconque des revendications 1 à 3, **caractérisé en ce que** l'épaisseur totale du substrat et de la couche colorée ou, selon le cas, de la couche de laque est de 0,05 à 4 mm, de préférence de 0,1 mm à 2 mm, de manière particulièrement préférée de 0,2 à 2 mm.

5. Matériau stratifié selon l'une quelconque des revendications 1 à 4, **caractérisé en ce que** le substrat est constitué par une ou plusieurs couches de matériau synthétique et/ou la couche colorée est constituée par une ou plusieurs couches.

6. Matériau stratifié selon l'une quelconque des revendications 1 à 5, **caractérisé en ce que** le polycarbonate dans le liant de l'encre d'imprimerie ou de la laque d'imprimerie présente un poids moléculaire M_{w} (moyenne pondérale) d'au moins 10 000 et/ou contient des unités de structure carbonate difonctionnelles de formule (I), 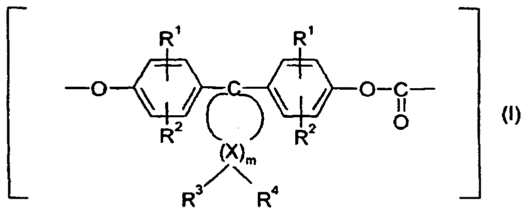 où
R¹ et R² signifient hydrogène, halogène, C₁-C₈-alkyle, C₅-C₆-cycloalkyle, C₆-C₁₀-aralkyle,
m signifie un nombre entier de 4 à 7,
R³ et R⁴ signifient, en pouvant être choisis individuellement pour chaque X, indépendamment l'un de l'autre, hydrogène ou C₁-C₆-alkyle et
X signifie carbone,
à condition que sur au moins un atome X, R³ et R⁴ représentent simultanément alkyle.

7. Matériau stratifié selon la revendication 6, **caractérisé en ce que** le polycarbonate contient au moins 30% en mole de l'unité de structure carbonate difonctionnelle de formule (I), par rapport à la quantité de matière de toutes les unités de structure carbonate difonctionnelles contenues.

8. Matériau stratifié selon l'une quelconque des revendications 1 à 7, **caractérisé en ce que** la température de ramollissement de l'encre d'imprimerie ou de la laque d'imprimerie durcie par des rayons est < 144°C, de préférence < 120°C, plus préférablement < 100°C.

9. Matériau stratifié selon l'une quelconque des revendications 1 à 8, **caractérisé en ce que** le matériau stratifié est moulé.

10. Procédé pour la préparation d'un matériau stratifié selon les revendications 1 à 9, **caractérisé en ce qu'**un substrat, en particulier une feuille en un matériau synthétique thermoplastique, présentant une couche colorée et/ou une couche de laque, est revêtu par impression, en particulier par sérigraphie, puis durci par un durcissement par des rayons.

11. Procédé selon la revendication 10, **caractérisé en ce que** le substrat est moulé avant le revêtement par la couche colorée et/ou la couche de laque ou le matériau stratifié est moulé après le revêtement du substrat par la couche colorée et/ou la couche de laque.

12. Pièce moulée remplie par l'arrière, **caractérisée en ce qu'**un matériau stratifié selon l'une quelconque des revendications 1 à 9 est rempli par l'arrière, une ou plusieurs fois, sur le côté imprimé par l'encre d'imprimerie ou la laque d'imprimerie avec au moins un matériau synthétique thermoplastique, le matériau synthétique thermoplastique utilisé pour le remplissage par l'arrière présentant une température de 200°C ou plus.

13. Procédé pour la fabrication d'une pièce moulée remplie par l'arrière selon la revendication 12, **caractérisé en ce qu'**un matériau stratifié fabriqué selon le procédé selon la revendication 10 ou 11 est rempli par l'arrière une ou plusieurs fois, sur le côté imprimé par l'encre d'imprimerie ou la laque d'imprimerie à une température de 200°C ou plus avec au moins un matériau synthétique thermoplastique.

14. Procédé selon la revendication 13, **caractérisé en ce que** le remplissage par l'arrière est réalisé par injection, compression ou moussage par l'arrière, de préférence par injection par l'arrière.

15. Procédé selon la revendication 13 ou 14, **caractérisé en ce qu'**un matériau stratifié fabriqué selon le procédé selon la revendication 10 ou 11 est revêtu sur le côté imprimé par l'encre d'imprimerie ou la laque d'imprimerie par une couche de polyuréthane par impression, en particulier par sérigraphie, puis rempli par l'arrière avec au moins un matériau synthétique thermoplastique.
